(19) Europäisches Patentamt
European Patent Office
Office européen des brevets

(11) EP 2 186 651 B1

# (12) EUROPÄISCHE PATENTSCHRIFT

(45) Veröffentlichungstag und Bekanntmachung des Hinweises auf die Patenterteilung:
**03.07.2013 Patentblatt 2013/27**

(51) Int Cl.:
***C08C 19/38*** *(2006.01)* ***C08L 15/00*** *(2006.01)*

(21) Anmeldenummer: **09175099.2**

(22) Anmeldetag: **05.11.2009**

(54) **Lagerstabile, hydroxylmodifizierte Mikrogellatices**

Hydroxyl modified microgel lattices which can be stored safely for a long time

Micro-gellatices modifiés par hydroxyle et stables au stockage

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **13.11.2008 DE 102008056975**

(43) Veröffentlichungstag der Anmeldung:
**19.05.2010 Patentblatt 2010/20**

(73) Patentinhaber: **LANXESS Deutschland GmbH**
**51369 Leverkusen (DE)**

(72) Erfinder: **Obrecht, Werner**
**47447, Moers (DE)**

(56) Entgegenhaltungen:
**EP-A1- 1 063 259**
**EP-A1- 1 203 786**
**EP-A1- 1 801 125**
**DE-A1-102007 011 424**
**DE-A1-102007 011 427**

Bemerkungen:
Die Akte enthält technische Angaben, die nach dem Eingang der Anmeldung eingereicht wurden und die nicht in dieser Patentschrift enthalten sind.

EP 2 186 651 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Mikrogele und Emulgatorzusammensetzungen, welche bei der Herstellung von diesen Mikrogelen Anvendung finden. Weiterer Gegenstand der vorliegenden Erfindung ist ein Verfahren zur Herstellung der Mikrogele und der Emulgatorzusammensetzungen. Ferner betrifft die vorliegende Erfindung auch die Verwendung der Emulgatorzusammensetzung zur Herstellung von Mikrogelen.

Mikrogele sind unter verschiedenen Bezeichnungen, beispielsweise als Mikrogele und Kautschukpartikel, bekannt. Mikrogele werden unter anderem in EP 0 405 216 A, DE 42 20 563 A, DE 197 01 488 A und DE 197 01 487 A beschrieben. Mikrogele werden beispielsweise zur Verbesserung der Verarbeitbarkeit von Kautschukmischungen sowie zur Eigenschaftsverbesserung von Vulkanisaten, insbesondere zur Verbesserung der physikalischen Eigenschaften wie Spannungswert, Reißfestigkeit, Abriebwiderstand, Rollwiderstand, Erwärmung bei dynamischer Beanspruchung (heat-build-up) und Nassrutschfestigkeit eingesetzt. Aufgrund dieser Eigenschaftsverbesserungen eignen sich Mikrogele insbesondere Für die Verwendung bei der Herstellung verschiedene Reifenbauteile, insbesondere von Reifenlaufflächen.

Auch funktionalisierte Mikrogele sind bekannt. Funktionelle Mikrogele werden beispielsweise in EP 1 152 030 A, EP 1 664 158 A, EP 1 149 866 A, EP 1 149 867 A, EP 1 298 166 A, EP 1 291 369 A, EP 1 245 630 A und EP 1 520 732 A beschrieben, wobei hydroxylmodifizierte Mikrogele von besonderem Interesse sind. Hydroxylmodifizierte Mikrogele werden beispielsweise in Polyurethanen (vgl. DE 199 19 459 A) verwendet. Bei der Herstellung von Reifenlaufflächen werden hydroxylmodifizierte Mikrogele häufig in Kombination mit kieselsäurehaltigen Füllstoffen eingesetzt, wodurch Reifen mit verbesserter Laufleistung erhalten werden.

Zur Erzielung guter Vulkanisateigenschaften werden die funktionalisierten, beispielsweise hydroxylmodifizierten Gele bei der Vulkanisation an die Kautschukmatrix "angekoppelt" bzw. "aktiviert". Geeignete Aktivatoren sind schwefelhaltige Organosiliziumverbindungen (EP 1 063 259 A), multifunktionelle Isocyanate (EP 1 110 986 A), Isocyanatosilane (WO 02/12389 A) sowie Phenolharzedukte (WO 02/32990 A). Ferner ist bekannt, dass zur Erzielung guter physikalischer Eigenschaften der gelhaltigen Vulkanisate ein hoher Gehalt an oberflächenständigen- Hydroxylgruppen notwendig ist (EP 1 520 732 A). Hieraus ergibt sich ein Bedarf nach hydroxylgruppenhaltigen Mikrogelen, welche einen hohen Hydroxylgruppengehalt aufweisen.

Für die Herstellung derartiger hydroxylmodifizierter Mikrogele werden insbesondere zwei Verfahren angewandt:

Bei einem ersten Verfahren werden zur Einführung funktioneller Gruppen durch Pfropfung Monomere mit funktionellen Gruppen auf ein unmodifiziertes Mikrogel in der Latexphase gepfropft. Für die Hydroxylmodifikation verwendet man beispielsweise die Acrylate bzw. Methacrylate von Hydroxyethanol, Hydroxypropanol und Hydroxybutanol. Das unmodifizierte Mikrogel, das als Pfropfgrundlage venvendet wird, wird beispielsweise durch Vernetzung eines im Wesentlichen unvernetzten Kautschuklatex mittels Dicumylperoxid erhalten (DE 100 35 493 A). Diese Vorgehensweise zur Herstellung hydroxylmodifizierter Mikrogele ist aufgrund der Vielzahl an notwendigen Verfahrensschritten recht aufwändig.

Bei einem zweiten Verfahren erhält man die Latices der hydroxylmodifizierten Mikrogele durch Copolymerisation (von mehr als zwei Monomeren) in einem Reaktionsschritt durch Eniulsionsverfahren. Entsprechende Verfahrensweisen werden in EP 1 664 158 A, EP 1 149 866 A, EP 1 149 867 A, EP 1 298 166 A, EP 1 291 369 A und EP 1 245 630 A beschrieben. Die in den genannten Patentschriften verwendeten Emulgatorsysteme basieren auf Sulfonsäuren, modifizierten Harzsäuren, Fettsäuren und Mischungen derselben.

Bei Verwendung von Emulgatormischungen auf Sulfonsäurebasis (EP 1 664 158 A) oder von Emulgatormischungen auf Basis von überwiegend Sulfonaten und geringfügigen Mengen an Carboxylaten werden Latices der hydroxylierten Mikrogele mit ausreichend hoher Latexstabilität erhalten. Bei der Koagulation dieser Kautschuklatices entstehen allerdings sehr feine Krümel von weniger als 2 mm Durchmesser, die im großtechnischen Maßstab mit Hilfe von Sieben nicht quantitativ vom Latexserum abtrennbar sind. Hierdurch kommt es zu erheblichen Ausbeuteverlusten.

In den Ausführungsbeispielen von DE-A-10 2007 011 427 und DE-A-10 2007 011 424 werden zwar hydroxyfunktionalisierte Mikrogele eingesetzt, welche unter Verwendung einer Emulgatormischung aus einer modifizierten Harzsäure (I) und einer Fettsäure (II) mit einem Neutralisationsgrad von 150 % erhalten wurden, wobei diese Mikrogele größtenteils durch Verwendung von vinylaromatischen Monomeren erhalten werden. Derartige Mikrogellatices sind relativ leicht isolierbar und unabhängig vom Neutralisierungsgrad.

Bei Verwendung von Emulgatoren auf Basis modifizierter Harzsäuren (EP 1 149 866 A, EP 1 149 867 A und EP 1 298 166 A) bzw. von anteilmäßig nicht näher definierten Mischungen modifizierter Harzsäure mit Fettsäure (EP 1 291 369 A und EP 1 245 630 A) entstehen Latices, die bei der Koagulation ausreichend große Krümel ergeben, so dass diese ohne Ausbeuteverluste vom Latexserum beispielsweise mit Hilfe von Sieben abtrennbar sind.

Allerdings ist die Stabilität der auf diese Weise hergestellten hydroxylhaltigen Latices nicht ausreichend. Unter einer nicht ausreichenden Stabilität wird im Rahmen der Erfindung insbesondere verstanden, dass eine Latexkoagulation während der Emulsionspolymerisation, eine Latexkoagulation bei der Entfernung flüchtiger Bestandteile durch Wasserdampfdestillation, eine Latexkoagulation beim Fördern der Latices durch Pumpen, eine Änderung der Teilchengröße

und/oder eine Latexkoagulation bei Latexlagerung auftreten kann.

Die nicht ausreichende Latexstabilität führt dabei insbesondere zu den folgenden Nachteilen:

1) Während der Polymerisation bilden sich Polymerbeläge an der Reaktorwand. Hierdurch werden die Reaktorstandzeiten reduziert und es ist ein erhöhter Reinigungsaufwand notwendig.

2) Während der Entfernung von nicht umgesetzten Monomeren durch Wasserdampfdestillation kommt es zu einer partiellen oder vollständigen Koagulation der Latices. Hierdurch werden die Ausbeuten signifikant reduziert und es kommt zu einem erheblichen Reinigungsaufwand der Aggregate, in denen die Wasserdampfdestillation durchgeführt wird.

3) Durch eine Reduktion der Scherstabilität erfolgt bei Umpumpvorgängen eine partielle oder quantitative Latexkoagulation. Hierdurch werden ebenfalls die Ausbeuten signifikant reduziert.

4) Bei der Herstellung der hydroxylierten Mikrogele nach dem Lehre des Standes der Technik kommt es zu einer Zunahme des scheinbaren Durchmessers der Latexteilchen und zu einer Latexkoagulation während einer Latexlagerung ohne Anwendung von Scherkräften.

Insbesondere bei Mikrogelen mit Hydroxylgehalten oberhalb von 5 Gew. % ergeben sich die erwähnten Probleme der Latexstabilität.

Im Hinblick auf den dargelegten Stand der Technik ist es die Aufgabe der vorliegenden Erfindung, ein Verfahren zur Herstellung leicht isolierbarer und lagerungsstabiler Latices von hydroxyfunktionalisierten, nicht auf vinylaromatischen Monomeren basierenden Mikrogelen bereitzustellen.

Gelöst wird diese Aufgabe unter Verwendung einer Emulgatorzusammensetzung, umfassend eine Mischung aus einer modifizierten Harzsäure (I) und einer Fettsäure (II), wobei der Neutralisationsgrad der Harzsäuren (I) und der Fettsäuren (II) 110 bis 155 % beträgt und das Gewichtsverhältnis von modifizierter Harzsäure zu Fettsäure zwischen 0,08 : 1 und 12 : 1 liegt und die hydroxylgruppenhaltigen Mikrogele aus Monomeren aufgebaut werden, welche ausgewählt werden aus der Gruppe, bestehend aus konjugierten Dienen (A), vernetzenden Monomeren (C) und hydroxylgruppenhaltigen Monomeren (D).

Der Neutralisationsgrad bezieht sich dabei entweder auf eine der Einzelverbindungen der modifizieiten Harzsäure (I) bzw. Fettsäure (II) oder aber auf die Gesamtmischung aus modifizierter Harzsäure (I) und Fettsäure (II).

Erfindungsgemäß wurde herausgefunden, dass unter Verwendung dieser spezifischen Emulgatorzusammensetzung bei der Herstellung von Mikrogelen durch Emulsionspolymerisation Mikrogele resultieren, die eine verbesserte Scher- und Lagerstabilität aufweisen.

Gleichzeitig entspricht die Qualität der erhaltenen Mikrogele hinsichtlich anderer physikalischer Eigenschaften zumindest der Qualität herkömmlicher Mikrogele, wie sie aus dem Stand der Technik bekannt ist.

Die dabei erhaltenen Mikrogele können einen Gelgehalt von im Allgemeinen mehr als 70 Gew.-%, vorzugsweise mehr als 75 Gew.%, besonders bevorzugt mehr als 80 Gew.%, aufweisen.

Die unter Verwendung der erfindungsgemäßen Emulgatorzusammensetzung erhaltenen Mikrogele weisen darüber hinaus einen Quellungsindex von im Allgemeinen weniger als 30, vorzugsweise weniger als 25, besonders bevorzugt weniger als 20, auf.

Die Mikrogele weisen darüber hinaus einen Gehalt einpolymerisierter hydroxylhaltiger Monomerer von größer als 0,1 Gew.-% auf. Die Hydroxylzahl der erhaltenen Mikrogele ist im Allgemeinen größer als 0,5.

Darüber hinaus können die Mikrogele vorzugsweise auf wirtschaftliche Weise mit kurzen Polymerisationszeiten, besonders bevorzugt mit Polymerisationszeiten unterhalb von 10 Stunden, und vorzugsweise hohen Polymerisationsumsätzen, besonders bevorzugt mit Polymerisationsumsätzen von höher als 80 %, erhalten werden.

Schließlich liefern die Mikrogele bei der Latexkoagulation ausreichend große Krümel, vorzugsweise von mehr als 5 mm, so dass diese effizient über Siebe vom Latexserum abgetrennt werden können.

Emulgatorsystem

Die vorliegende Erfindung verwendet ein Emulgatorsystem, in welchem mindestens eine modifizierte Harzsäure (I) und mindestens ein Fettsäure (II) verwendet wird.

Im Rahmen der vorliegenden Erfindung können in der Emulgatorzusammensetzung jedoch auch mehrere unterschiedliche modifizierte Harzsäuren (I), beispielsweise 2, 3, 4 oder 5 unterschiedliche Harzsäuren verwendet werden.

Im Rahmen der vorliegenden Erfindung können in der Emulgatorzusammensetzung jedoch auch mehrere unterschiedliche Fettsäuren (I), beispielsweise 2, 3, 4 oder 5 unterschiedliche Fettsäuren verwendet werden.

Die Verwendung der Alkalisalze von Fettsäuren bei der Herstellung von Polymeren ist lange bekannt (Methoden der organischen Chemie, Houben-Weyl, Band XIV/1, Makromolekulare Stoffe, Teil 1, Seite 192-194, Georg Thieme Verlag, 1961). Die Kettenlänge der Fettsäuren beträgt zwischen 6 und 22 Kohlenstoffatomen. Auch einfach oder mehrfach ungesättigte Fettsäuren sind geeignet. Die Säuren können, wie gesagt, alleine oder als Gemisch von Säuren unterschiedlicher Kettenlänge eingesetzt werden. Wird ein Gemisch eingesetzt, sollte der Anteil an Fettsäuren mit Kettenlängen von 16 bis 18 Kohlenstoffatomen $\geq$ 80 % betragen.

Auch die gleichzeitige Verwendung von mehreren unterschiedlichen modifizierten Harzsäuren (I) mit mehreren unterschiedlichen Fettsäure (II) ist im Rahmen der vorliegenden Erfindung möglich.

Unter einer modifizierten Harzsäure (I) wird im Rahmen der vorliegenden Erfindung eine Harzsäure verstanden, welche durch Dimerisierung, Disproportionierung und/oder Hydrierung von unmodifizierten Harzsäuren erhalten wird. Entsprechende modifizierte Harzsäuren werden ausgehend von unmodifizierten Harzsäuren, welche wiederum beispielsweise ausgewählt werden aus der Gruppe, bestehend aus Pimarsäure, Neoabietinsäure, Abietinsäure, Levopimarsäure und Palustrinsäure, durch die genannten Modifizierungen erhalten.

In einer besonders bevorzugten Ausführungsform der vorliegenden Erfindung ist die modifizierte Harzsäure eine disproportionierte Harzsäure (Ullmann's Encyclopedia of Industrial Chemistry, 6. Auflage, Band 31, S. 345-355). Die bevorzugte disproportionierte Harzsäure als modifizierte Harzsäure ist kommerziell erhältlich.

Die eingesetzten Harzsäuren sind aus Wurzeln, Kiefernbalsam und Tallöl gewonnene tricyclische Diterpencarbonsäuren. Diese sogenannten unmodifizierten Harzsäuren können beispielsweise zu disproportionierten Harzsäuren umgearbeitet werden, wie es in W. Bardendrecht, L.T. Lees in Ullmanns Encyclopädie der Technischen Chemie, 4. Auflage, Bd. 12, 525 - 538, Verlag Chemie, Weinheim - New-York 1976 beschrieben ist. In Form ihrer Alkalisalze werden überwiegend disproportionierte Harzsäuren als Emulgatoren zur Herstellung von Polymeren und Latices verwendet (W. Barendrecht, L.T. Lees in Ullmanns Encyclopädie der Technischen Chemie, 4. Auflage, Bd. 12, 530, Verlag Chemie, Weinheim - New York 1976).

Neben der modifizierten Harzsäure (I) umfasst die Zusammensetzung ferner mindestens eine Fettsäure (II).

Die Fettsäuren enthalten vorzugsweise 6 bis 22 Kohlenstoffatome pro Molekül, besonders bevorzugt 6 bis 18 Kohlenstoffatome pro Molekül. Sie können vollständig gesättigt sein oder eine oder mehrere Doppelbindungen oder Dreifachbindungen im Molekül enthalten.

Beispiele für erfindungsgemäß geeignete Fettsäuren sind Capronsäure, Laurinsäure, Myristinsäure, Palmitinsäure, Stearinsäure, Ölsäure, Linolsäure und Linolensäure.

Die Carbonsäuren können in einer weiteren Ausgestaltung der vorliegenden Erfindung auch in herkunftsspezifischen Mischungen, wie beispielsweise Castoröl, Baumwollsaat, Erdnussöl, Leinsamenöl, Kokosnussfett, Palmkernöl, Olivenöl, Rapsöl, Sojabohnenöl, Fischöl und Rindertalg, vorliegen (Ullmann's Encyclopedia of Industrial Chemistry, 6. Auflage, Band 13, S. 75-108).

Bevorzugte Carbonsäuren leiten sich von Rindertalg ab und sind teilhydriert. Insbesondere bevorzugt ist daher die teilhydrierte Talgfettsäure.

Sowoh! die Harzsäuren als auch die Fettsäuren sind kommerziell als freie Carbonsäuren, in teil-oder vollneutralisierter Form erhältlich.

Für die Ermittlung des bei der Polymerisation notwendigen Alkalizusatzes werden die zum Einsatz kommenden Harz- und Fettsäuren durch acidimetrische Titration charakterisiert (Maron, S. H., Ulevitch, I. N., Elder, M. E. "Fatty and Rosin Acids, Soaps, and Their Mixtures, Analytical Chemistry, Vol. 21, 6, 691-695; Maron, S. H.; Madow, B. P.; Borneman, E. "The effective equivalent weights of some rosin acids and soaps" Rubber Age (1952), 71-72). Auf diese Weise werden die Gehalte an freien Carbonsäuren und an Emulgatorsalzen ermittelt, um die für die gezielte Einstellung der Neutralisationsgrade der bei der Polymerisation eingesetzten Harz/Fettsäuregemische zu berechnen.

Da es sich bei den Emulgatoren um Gemische mit unbekanntem mittleren Molgewicht handelt, ist für die exakte Einstellung des Neutralisationsgrads im ersten Schritt eine titrimetrische Charakterisierung der eingesetzten Emulgatoren nohvendig, welcher vorzugsweise nach vorstehender Verfahrensweise durchgerührt wird.

Der Neutralisationsgrad der carboxylgruppenhaltigen Emulgatoren (R-COOH) berechnet sich auf Basis folgender stöchiometrischen Formel, wobei bei einem 100%igen Neutralisationsgrad sämtliche Carboxylgruppen des Emulgators mit einer äquimolaren Menge einer Metallhydroxidverbindung (MeOH) neutralisiert sind.

$$\text{R-COOH} + \text{MeOH} \longrightarrow \text{R-COO}^- \text{Me}^+ + H_2O$$

Me = Metallhydroxid

Für die Erzielung guter Latexstabilitäten ist der Neutralisationsgrad der Harz/Fettsäuremischung von Bedeutung. Der Neutralisationsgrad der Harzsäuren (I) und der Fettsäuren (II) beträgt vorzugsweise 104 bis 165 %, vorzugsweise 106 bis 160 %, besonders bevorzugt 110 bis 155 %, wobei unter einem Neutralisationsgrad von 100 % eine vollständige Salzbildung verstanden wird und bei einem Neutralisationsgrad von mehr als 100 % ein entsprechender Basenüberschuss verstanden wird.

Für die Neutralisation der Harz- und Fettsäuren können Basen, beispielsweise LiOH, NaOH, KOH, $NH_3$ und/oder $NH_4OH$, verwendet werden. Bevorzugt sind dabei Basen, welche keine schwerlöslichen Salze mit den Säuren bilden. Besonders bevorzugt als Basen sind LiOH, NaOH, KOH und $NH_4OH$.

Die Neutralisation der Carbonsäuren kann dabei vor der eigentlichen Verwendung der Emulgatorzusammensetzung, bevorzugt jedoch als in-situ-Neutralisation bei der Beladung des Reaktors oder in einem separaten Behälter vor der Zugabe in den Polymerisationsreaktor, erfolgen.

Die Harz- und Fettsäuren werden als Emulgator bei der Herstellung von Mikrogelen als Einzelkomponente oder gemeinsam eingesetzt, wobei die Menge an Harz- oder Fettsäure bzw. die Summe der Harz- und Fettsäure 2,2 bis 12,5 Gew.-Teile, bevorzugt 2,5 bis 10 Gew.-Teile, besonders bevorzugt 2,8 bis 7,5 Gew.-Teile, jeweils bezogen auf 100 Gew.-Teile der Monomermischung, beträgt.

Das Gewichtsverhältnis der Salze von Harzsäure (I) und Fettsäure (II) liegt vorzugsweise zwischen 0,05 : 1 und 15:1, besonders bevorzugt 0,08 : 1 und 12:1.

Neben den zwingenden Bestandteilen mindestens eines Salzes einer Harzsäure (I) und mindestens eines Salzes einer Fettsäure (II) kann die erfindungsgemäße Emulgatorzusammensetzung weitere Bestandteile aufweisen.

So kann die Emulgatorzusammensetzung zusätzlich beispielsweise neutrale und anionische Emulgatoren umfassen.

Insbesondere bei der Polymerisation sowie als Nachsatz im Anschluss an die Polymerisation zur Herstellung der Mikrogele ist die Verwendung weiterer Emulgatoren möglich, aber nicht erforderlich. Es können anionische und nichtionische Emulgatoren verwendet werden. Beispiele für anionische Emulgatoren sind Alkylsulfate, beispielsweise n-Dodecylsulfat (z. B. Texapon® K12 von Cognis); Alkylsulfonate (z. B. Mersolat® K30 der Lanxess Deutschland GmbH); Arylsulfonate (z. B. Marlon® der Sasol Germany GmbH); methylenverbrückte Bisnaphthalinsulfonate (z. B. Baykanol® PQ der Lanxess Deutschland GmbH); und Mono- und Diester der Sulfobernsteinsäure (Natriumsalz der Dioctylsulfobernsteinsäure). Geeignete nichtionische Emulgatoren sind Polyethylenoxid und Polypropylenoxid sowie Copolymerisate dieser beiden Monomeren. Auch Additionsprodukte von Ethylenoxid und Propylenoxid an aliphatische und aromatische Phenole sowie an Amine sind geeignet. Auch polymere neutrale oder anionische Stabilisierungsmittel können verwendet werden. Beispiele hiefür sind Polyvinylakohol, Hydroxyalkylcellulosen, Polyvinylpyrrolidon und Natriumpolyacrylat.

Durch die Verwendung der neutralen und anionischen Emulgatoren wird einerseits die Latexstabilität verbessert; andrerseits wird die Größe der bei der Koagulation der Latices entstehenden Kautschukkrümel kleiner. Aus diesem Grund wird der Zusatz der neutralen und anionischen Emulgatoren sowohl hinsichtlich deren Auswahl und hinsichtlich deren Menge vorzugsweise kontrolliert. Üblicherweise liegt der Zusatz anionischer Emulgatoren, wenn diese verwendet werden, im Bereich von 0 bis 0,5 Gew.-Teile, vorzugsweise bei 0 bis 0,25 Gew.-Teile, besonders bevorzugt 0 bis 0,10 Gew.-Teile.

Die vorstehende Emulgatorzusammensetzung wird bei der Herstellung von Mikrogelen verwendet.

Die dabei erhaltenen Mikrogele können einen Gelgehalt von 10 bis 100 Gew.% aufweisen, wobei es unter Verwendung der Emulgatorzusammensetzung möglich ist, Mikrogele mit einem Gelgehalt von im Allgemeinen mehr als 70 Gew.-%, vorzugsweise mehr als 75 Gew.%, besonders bevorzugt mehr als 80 Gew.-%, herzustellen.

Die unter Verwendung der Emulgatorzusammensetzung erhaltenen Mikrogele weisen darüber hinaus einen Quellungsindex von im Allgemeinen weniger als 30, vorzugsweise weniger als 25, besonders bevorzugt weniger als 20, auf.

Die Mikrogele weisen darüber hinaus einen Gehalt einpolymerisierter hydroxylhaltiger Monomerer von größer als 0,1 Gew.% auf. Die Hydrozylzahl der erhaltenen Mikrogele ist im Allgemeinen größer als 0,5.
Die Herstellung der Mikrogele erfolgt dabei vorzugsweise durch Emulsionspolymerisation.

Im Rahmen der vorliegenden Erfindung wird die Emulgatorzusammensetzung in dem erfindungsgemäßen Verfahren vorzugsweise in einer Menge von mindestens 2,2 Gew.-Teile, besonders bevorzugt mindestens 2,5 Gew.-Teile, jeweils bezogen auf die weiter untenstehende, näher definierte Monomerzusammensetzung, verwendet.

Im Rahmen der vorliegenden Erfindung wird die Emulgatorzusammensetzung in dem erfindungsgemäßen Verfahren vorzugsweise in einer Menge von 2,2 bis 12,5 Gew.-Teile, bevorzugt 2,5 bis 10 Gew.-Teile, besonders bevorzugt 2,8 bis 7,5 Gew.-Teile, jeweils bezogen auf 100 Gew.-Teile der Monomermischung, verwendet.

Besonders bevorzugte Bereiche sind Mengen von 2,2 bis 10,00 Gew.% und weiter bevorzugt 2,5 bis 8,00 Gew.-%.

Die Polymerisation wird vorzugsweise bei einer Temperatur von 10 bis 100 °C, besonders bevorzugt 12 bis 90 °C, insbesondere 15 bis 50 °C, durchgeführt.

Dabei ist es möglich, dass die Emulsionspolymerisation in isothermer, teiladiabatischer oder volladiabatischer Fahrweise durchgeführt wird.

Das erfindungsgemäße Verfahren kann darüber hinaus einen Verfahrensschritt der Koagulation umfassen, welche bei Temperaturen oberhalb der Glastemperatur des Mikrogels durchgeführt wird. Die Koagulationstemperaturen liegt dabei vorzugsweise mindestens 10 °C, besonders bevorzugt mindestens 15 °C, insbesondere mindestens 20 °C, höher als die Glastemperatur des Mikrogels. Die Einhaltung dieser erfindungsgemäß vorgesehenen Koagulationstemperaturen hat einen mitbestimmenden Einfluss auf die Krümelgröße der erhaltenen Mikrogele.

Im folgenden werden die in dem erfindungsgemäßen Verfahren neben der Emulgatorzusammensetzung verwendeten Bestandteile des Mikrogels näher erläutert.

**Monomere**

Für die Herstellung der Mikrogele werden Monomennischungen eingesetzt, die aus konjugierte Dienen (A), vernetzenden Monomeren (C) und hydroxylgruppenhaltigen Monomeren (D) bestehen, wobei die Gesamtmenge der Monomeren 100 Gew.-Teile beträgt.

Es ist möglich, ein hydroxyliertes vernetztes Mikrogel aus nur drei Komponenten, nämlich den Bestandteilen (A), (C) und (D) herzustellen.

Als konjugierte Diene (A) werden vorzugsweise 1,3-Butadien, Isopren, 2,3-Dimethyl-1,3-butadien und Chloropren verwendet. Bevorzugt sind 1,3-Butadien und Isopren.

Es werden vorzugsweise 0 bis 94,9 Gew.%, bevorzugt 0 bis 94,0 Gew.-%, besonders bevorzugt 0 bis 93,5 Gew.%, des Diens (A), jeweils bezogen auf 100 Gew.-Teile der bei der Polymerisation verwendeten Monomeren, eingesetzt.

Als vernetzende Monomere (C) werden Monomere eingesetzt, die mindestens 2 Doppelbindungen im Molekül enthalten. Hierzu gehören die (Meth)acrylate von Diolen mit 1 bis 20 Kohlenstoffatomen wie Ethandioldi(meth)acrylat, 1,2-Propandioldi(meth)acrylat, 1,3-Propandiol (meth)acrylat, 1,2-Butandioldi(meth)acrylat, 1,3-Butandioldi(meth)acrylat, 1,4-Butandioldi(meth)acrylat, 1,6-Hexandioldi(meth)acrylat (C1), Polyethylengykoldi(meth)acrylate und Polypropylenglykoldi(meth)acrylate sowie Diole auf der Basis von Mischpolymerisaten von Ethylenoxid und Propylenoxid mit Polymerisationsgraden von 1 bis 25 (C2), Diole auf der Basis von polymerisiertem Tetrahydrofuran mit Polymerisationsgraden von 1 bis 25 (C3), die Bis- und Tris-(meth)acrylate von dreiwertigen Alkoholen wie Trimethylolpropandi(meth) acrylat, Trime-thylolpropantri(meth)acrylat, Glycerindi(meth)acrylat und Glycerintri(meth)acrylat (C4), die Bis-, Tris- und Tetra-(meth)acrylate von vierwertigen Alkoholen wie Pentaerythritdi(meth)acrylat, Pentaerythrittri(meth)acrylat und Pentaerythrittetra(meth)acrylat (C5), aromatische Polyvinylverbindungen (C6) wie Divinylbenzol, Diisopropenylbenzol, Trivinylbenzol, sowie sonstige Verbindungen mit mindestens zwei Vinylgruppen wie Triallcyanurat, Triallylisocyanurat, Crotonsäurevinylester und Crotonsäureallylester (C7). Bevorzugt sind die Ester der (Meth)acrylsäure von Ethandiol, 1,3-Propandiol, 1,4-Butandiol, 1,6-Hexandiol, Trimethylolpropan, Pentaerythrit sowie die aromatische Polyvinylverbindung Divinylbenzol.

Die vernetzenden Monomeren (C) werden in einer Menge von 0,1 Gew.-% bis 15 Gew.%, bevorzugt 0,5 bis 12,5 Gew.%, besonders bevorzugt 1 bis 7,5 Gew.-%, jeweils bezogen auf 100 Gew.-Teile der bei der Polymerisation verwendeten Monomeren, eingesetzt.

Neben einer Reihe anderer Parameter, wie der Reglennenge, des Polymerisationsumsatzes und der Polymerisationstemperatur, werden der Gelgehalt und der Quellungsindex der Mikrogele vor allem durch die Menge an vernetzendem Monomer (C) beeinflusst. Außerdem wird durch das Monomer (C) die Glastemperatur von entsprechenden unvernetzten, aus den Monomeren (A) und (B) bestehenden, Homo- und/oder Copolymeren erhöht.

Als hydroxylgruppenhaltige Monomere (D) werden im Allgemeinen Hydroxyalkyl(meth)acrylate (D1), Hydroxyalkylcrotonate (D2), Mono(meth)acrylate von Polyolen (D3), hydroxylgruppenmodifizierte ungesättigte Amide (D4), hydroxylgruppenhaltige aromatische Vinylverbindungen (D5) sowie sonstige hydroxylgruppenhalte Monomere (D6) eingesetzt.

Hydroxyalkyl(meth)acrylate (D1) sind beispielsweise 2-Hydroxyethyl(meth)acrylat, 3-Hydroxyethyl(meth)acrylat, 2-Hydroxpropyl(meth)acrylat, 3-Hydroxpropyl(meth)acrylat, 2-Hydroxybutyl(meth)acrylat, 3-Hydroxybutyl(meth) acrylat und 4-Hydroxybutyl(meth)acrylat.

Hydroxyalkylcrotonate (D2) sind beispielsweise 2-Hydroxyethylcrotonat, 3-Hydroxyethylcrotonat, 2-Hydroxpropylcrotonat, 3-Hydroxpropylcrotonat, 2-Hydroxybutylcrotonat, 3-Hydroxybutylcrotonat und 4-Hydroxybutylcrotonat.

Mono(meth)acrylate von Polyolen (D3) leiten sich von zwei- und mehrwertigen Alkoholen wie Ethylenglykol, Propandiol, Butandiol, Hexandiol, Trimethylolpropan, Glycerin, Pentaerythrit sowie von oligomerisiertem Ethylenglykol und Propylenglykol, die 1 bis 25 der genannten Glykoleinheiten enthalten, ab.

Hydroxylgruppenmodifizierte ungesättigte Amide (D4) sind beispielsweise Monomere wie N-Hydroxymethyl (meth)acrylamid, N-(2-Hydroxyethyl(meth)acrylamid und N,N-Bis(2-Hydroxyethyl)(meth)acrylamid.

Hydroxylgruppenhaltige aromatische Vinylverbindungen (D5) sind 2-Hydroxystyrol, 3-Hydroxystyrol, 4-Hydroxystyrol, 2-Hydroxy-$\alpha$-methylstyrol, 3-Hydroxy-$\alpha$-methylstyrol, 4-Hydroxy-$\alpha$-methylstyrol und 4-Vinylbenzylakohol.

Weitere hydroxylgruppenhaltige Monomere (D6) sind beispielsweise (Meth)allylalkohol.

Die hydroxylgruppenhaltigen Monomeren (D) werden in einer Menge von vorzugsweise 0,1 bis 20 Gew.%, bevorzugt 0,5 bis 15 Gew.-%, besonders bevorzugt 1 bis 12,5 Gew.%, jeweils bezogen auf 100 Gew.-Teile der bei der Polymerisation verwendeten Monomeren, eingesetzt.

Durch das Verhältnis der einpolymerisierten Monomeren wird die Glastemperatur des Mikrogels festgelegt. Für eine Abschätzung der Glastemperatur kann die Fox-Flory-Beziehung herangezogen werden, wobei für die Glastemperatur des Mikrogels in erster Näherung der Gewichtsanteil der Monomeren (A) und (B) entscheidend ist.

$$Tg = \frac{m_A}{Tg_A} + \frac{m_B}{Tg_B}$$

| | |
|---|---|
| Tg: | Glastemperatur des Copolymers |
| $Tg_A$: | Glastemperatur des Homopolymers A |
| $Tg_B$: | Glastemperatur des Homopolymers A |
| $m_A$: | Gewlchtsentell des Monomers A |
| $m_B$: | Gewichtsantell des Monomers B |

Zweckmäßigerweise verwendet man in der Fox-Flory-Beziehung für die Homopolymeren der Monomeren (A) und (B) wie Polybutadien, Polyisopren, Polystyrol, Poly-4-methylstyrol und Poly($\alpha$)ethylstyrol folgende Glastemperaturen:

| | |
|---|---|
| Polybutadien: | - 80 °C |
| Polyisopren: | - 65 °C |
| Polystyrol: | 100 °C |
| Poly-4-methylstyrol: | 104 °C |
| Poly($\alpha$)methylstyrol: | 115°C |

Glastemperaturen weiterer Homopolymerer von (A) und (B) finden sich in J. Brandrup, E. H. Immergut, Polymer Handbook, Wiley & Sons 1975.

Durch Copolymerisation mit den vernetzenden Monomeren (C) liegen die Glastemperaturen in der Regel um 1 °C bis 10 °C höher als die der entsprechenden unvernetzten Homo- oder Copolymeren, wobei die Glastemperaturen der Mikrogele in erster Näherung proportional mit dem Vernetzungsgrad ansteigen. Bei schwach vernetzen Mikrogelen liegen die Glastemperaturen nur ca. 1 °C höher als bei den entsprechenden Homo- oder Copolymeren. Bei hochvernetzten Mikrogelen können die Glastemperaturen bis zu 10 °C höher liegen als die Glastemperaturen der entsprechenden unvernetzten Homo- oder Copolymeren. Der Einfluss des hydroxylgruppenhaltigen Monomers (D) auf Tg ist in erster Näherung vernachlässigbar.

Die Glastemperaturen der nach dem Verfahren hergestellten Gele liegen üblicherweise im Bereich -78 °C bis 150 °C, vorzugsweise zwischen -78 °C bis 125 °C.

Durch die Menge an vernetzendem Monomer (C) sowie durch die Reglermenge (wird weiter unten näher beschrieben), den Polymerisationsumsatz und die Polymerisationstemperatur wird der Gelgehalt und der Quellungsindex des Gels eingestellt. Durch Wahl und Menge des Vernetzers können Gelgehalte von 10 bis 100 Gew.-% erreicht werden. Bevorzugte Gelgehalte liegen jedoch oberhalb von 70 Gew.-%, besonders bevorzugt oberhalb von 75 Gew.%, insbesondere oberhalb 80 Gew.%.

Die Quelllungsindices der resultierenden Mikrogele liegen im Allgemeinen unterhalb von 30, vorzugsweise unterhalb 25, besonders bevorzugt unterhalb 20.

Der Hydroxylgruppengehalt wird durch Umsetzung der aus dem Latex isolierten und getrockneten Mikrogele durch Umsetzung mit Essigsäureanydrid und anschließender Titration der hierbei frei werdenden Essigsäure mit KOH nach DIN 53240 bestimmt. Der KOH-Verbrauch ist mit dem Hydroxylgehalt der Gele äquivalent und wird als Hydroxylzahl mit der Dimension mg KOH/g Polymer bezeichnet.

Die Hydroxylzahl der resultierenden Mikrogele liegt im Allgemeinen zwischen 0,5 bis 200, insbesondere zwischen 1 bis 150, vorzugsweise zwischen 5 bis 100, jeweils pro g trockenes Mikrogel.

**Aktivatoren**

Geeignete Polymerisationsinitiatoren sind Verbindungen, die in Radikale zerfallen. Hierzu gehören Verbindungen, die eine -O-O- Einheit (Peroxo-Verbindungen) sowie eine -N=N- Einheit (Azoverbindung) enthalten. Zu den Peroxoverbindungen gehören Wasserstoffperoxid, Peroxodisulfate, Peroxodiphosphate, Perborate, Hydroperoxide, Persäuren, Persäureester und Peroxide. Geeignete Peroxodisulfate sind Natrium-, Kalium- und Ammoniumperoxodisulfat. Geeignete Hydroperoxide sind tert.-Butylhydroperoxid, Cumylhydroperoxid und p-Menthanhydroperoxid. Geeignete Peroxide sind Benzoylperoxid, 2,4,-Dichlorbenzoylperoxid, tert.-Butylperbenzoat, Dicumylperoxid und Di-tert.-butylperoxid. Geeignete Azoverbindungen sind Azobisisobutyronitril, Azobisvaleronitril und Azobiscyclohexannitril.

Wasserstoffperoxid, Hydroperoxide, Persäuren, Persäureester, Peroxodisulfat, Peroxodiphosphat und Perborat können auch in Kombination mit Reduktionsmitteln, wie Dithionit, Sulfenaten, Sulfinaten, Solfoxylaten, Sulfit, Metabisulfit, Disulfit, Zuckern, Harnstoff, Thioharnstoff, Xanthogenaten, Thioxanthogenaten, Hydraziniumsalzen und Perthiocarbonat, eingesetzt werden.

Aktivatorsysteme, die durch Kombination eines Oxidations- mit einem Reduktionsmittel erhalten werden, bezeichnet man als Redoxsysteme. Zusätzlich setzt man derartigen Redoxsystemen als Katalysator Salze von Übergansmetallverbindungen wie Eisen, Cobalt oder Nickel in Kombination mit geeigneten Komplexbildnern, wie Natrium-Ethylendiamtetraacetat, Natrium-Nitrilotriacetat sowie Kalium-Diphosphat, zu. Mit dem Komplexbildner soll erreicht werden, dass das Übergangsmetallsalz auch in alkalischem Milieu gelöst bleibt. Ein bevorzugtes Redoxsystem besteht aus p-Menthanhydroperoxid, Natriumformaldehydsulfoxylat, Eisen(II)-sulfat und Natrium-Ethylendiaminoacetat.

Die Menge an Polymerisationsinitiator beträgt im Allgemeinen 0,001 bis 10 Gew.-Teile, insbesondere 0,5 bis 10 Gew.-Teile, vorzugsweise 1 bis 6 Gew.-Teile, jeweils bezogen auf 100 Gew.-Teile an verwendeten Monomeren. Die molare Menge an Reduktionsmittel liegt vorzugsweise zwischen 50 % bis 500 %, besonders bevorzugt 60 % bis 400 %, insbesondere 70 bis 300 %, jeweils bezogen auf die molare Menge des eingesetzten Oxidationsmittels.

Die molare Menge an Komplexbildner bezieht sich auf die Menge an eingesetztem Übergangsmetall und kann bis zu einer zehnfachen äquimolaren Menge betragen.

Durch die Menge des Polymerisationsinitiators wird die Reaktionsgeschwindigkeit gesteuert.

Die portionsweise Zugabe sämtlicher sowie einzelner Komponenten des Initiatorsystem ist zur Einstellung der gewünschten Reaktionsgeschwindigkeit bevorzugt. Vorzugsweise werden zu Beginn der Polymerisation 30 % des Reduktionsmittels in Kombination mit Eisen und Komplexbildnern zusammen mit 30 % des Oxidationsmittels in den Reaktor gegeben. Die Restmengen an Reduktions- und Oxidationsmitteln werden in diesem Fall portionsweise oder kontinuierlich in die Reaktionsmischung gegeben. Durch die Geschwindigkeit der Zugabe der Aktivatorkomponenten ist es möglich, die Reaktionsgeschwindigkeit in gewissen Grenzen zu steuern.

**Regler**

Als Regler können beispielsweise lineare und verzweigte Mercaptane, Xanthogendisulfide, Thioglykole, Thiuramdisulfide, halogenierte Kohlenwasserstoffe und verzweigte Kohlenwasserstoffe eingesetzt werden.

Die Mercaptane weisen vorzugsweise 6 bis 20 Kohlenstoffatome auf.

Beispiele für geeignete Mercaptane sind n-Hexylmercaptan, n-Dodecylmercaptan, 2,4,4'-Trimetylpentan-2-thiol, 2,2',4,6,6'-Pentamethylheptan-4-thiol, 2,2',6,6'-Tetramethylheptan-4-methanthiol-2 und 2,2',4,6,6',8,8'-Heptamethylnonan-4-thiol.

Beispiele for Xanthogendisulfide sind Dimethylxanthogendisulfid, Diethylxanthogendisulfid und Diisopropylxanthogendisulfid.

Beispiele für Thiuramdisulfide sind Tetramethylthiuramdisulfid, Tetraethylthiuramdisulfid und Tetrabutylthiuramdisulfid.

Beispiele für halogenierte Kohlenwasserstoffe sind Tetrachlorkohlenstoff, Ethylbromid und Methyljodid.

Beispiele fUr verzweigte Kohlenwasserstoffe sind diejenigen, von denen leicht ein H-Radikal abgespaltet werden kann, wie Pentapltenylethan, 2,4-Diphenyl,4-Methyl-1-Penten, Dipenten sowie Terpene wie $\alpha$-Terpen und $\gamma$-Terpen.

Bevorzugt sind tert.-Dodecylmercaptangemische auf der Basis von Triisobuten und Tetrapropen, die beispielsweise von der Lanxess Deutschland GmbH bzw. von Chevron Philips erhältlich sind. Der Regler wird, falls verwendet, vorzugsweise in einer Menge bis zu 2,50 Gew.-Teile, besonders bevorzugt bis zu 2,00 Gew.-Teile, insbesondere bis 1,00 Gew.-Teile, jeweils bezogen auf 100 Gew.-Teile der Monomermischung, eingesetzt.

**Polymerisationsumsatz**

Die durch das erfindungsgemäße Verfahren erhaltenen Polymerisationsumsätze liegen im Allgemeinen zwischen 65 und 100 %, vorzugsweise zwischen 70 und 100 %, besonders bevorzugt zwischen 80 und 100 %. Die hohen Polymerisationsumsätze sind vorteilhaft zur Erreichung folgender Ziele:

1. Hohe Raum/Zeit-Ausbeuten an Mikrogel;

2. Reduktion der Temperaturbelastung bei der Entfernung nicht umgesetzter Monomeren durch Strippen mit Wasserdampf; und

3. Einstellung hoher Gel-Vernetzungsgrade mit Gelgehalten oberhalb von 70 Gew.% und Quellungsindices kleiner als 30.

**Sonstige Bestandteile eines Polymerisationsansatzes**

**Wassermenge**

Die bei der Emulsionspolymerisation verwendete Wassermenge liegt vorzugsweise zwischen 150 und 900 Gew.-Teilen, besonders bevorzugt zwischen 180 und 700 Gew.-Teilen, insbesondere zwischen 200 und 400 Gew.-Teilen, jeweils bezogen auf 100 Gew.-Teile der Monomermischung.

**Salzzusätze**

Zur Reduktion der Viskosität während der Polymerisation können der wässrigen Phase Salze einwertiger Kationen wie Natrium, Kalium und Ammonium zugesetzt werden. Die entsprechenden Anionen können ein- und zweiwertig sein. Beispiele für die verwendeten Elektrolyte sind Natriumchlorid, Kaliumchlorid, Ammoniumchlorid, Natriumsulfat, Kaliumsulfat, Ammoniumsulfat, Natriumnitrat, Kaliumnitrat und Ammoniumnitrat. Bevorzugt ist Kaliumchlorid. Die Salze werden in einer Menge von vorzugsweise 0,01 bis 1,0 Gew.-Teilen, bevorzugt 0,05 bis 0,25 Gew.-Teilen, jeweils bezogen auf 100 Gew.-Teile der Monomermischung, zugesetzt.

**Stopper**

Zur Abstoppung der Polymerisation können im Allgemeinen Hydroxylamin, Dialkylhydroxylamin und Hydrazin sowie die hiervon abgeleiteten Salze eingesetzt werden.

Spezifische Beispiele für Stopper sind Hydroxylammoniumsulfat, Diethylhydroxylamin, Diisopropylhydroxylamin sowie Hydraziniumsulfat. Des weiteren können als Abstopper Natrium-Dimethlydithiocarbamat, Salze der Hydroxydithiocarbonsäure, Hydrochinon, aromatische Pheno-le wie tert.-Butylbrenzkatechol, Perthiocarbonat und Phenothiazin verwendet werden. Bevorzugt werden Abstoppagentien verwendet, die nitroasaminfrei sind bzw. keine nitrosierbare Bestandteile enthalten.

Die Dosierung des Stoppers beträgt vorzugsweise 0 bis 2,5 Gew.-Teile, besonders bevorzugt 0,05 bis 2,00 Gew.-Teile, insbesondere 0,10 bis 0,50 Gew.-Teile, jeweils bezogen auf 100 Gew.-Teile Monomermischung.

Da die Gelherstellung durch Polymerisation auf hohe Umsätze erfolgt und da die Gele einen hohen unlöslichen Anteil sowie niedrige Quellungsgrade in Toluol aufweisen, ist eine Abstoppung der Polymerisation jedoch nicht unbedingt erforderlich und kann im Rahmen der vorliegenden Erfindung auch entfallen.

**Entfernung von Restmonomeren nach der Polymerisation**

Nach Abschluss der Polymerisation wird der resultierende Latex zur Entfernung nicht umgesetzter Monomerer sowie flüchtiger Bestandteile mit Wasserdampf behandelt. Hierbei werden Temperaturen von vorzugsweise 70 bis 150 °C angewandt, wobei bei Temperaturen unterhalb von 100 °C der Druck reduziert wird.

Vor der Entfernung der flüchtigen Bestandteile kann eine Nachstabilisierung des Latex mit Emulgator erfolgen.

Falls ein Emulgator zur Nachstabilisierung eingesetzt wird, gelten die zuvor beschriebenen Regeln.

Als Emulgator für die Nachstabilisierung kann auch das erfindungsgemäße Emulgatorsystem verwendet werden.

Hierfür verwendet man zweckmäßigerweise die zuvor genannten Emulgatoren in Mengen von 0 bis 2,5 Gew.-%, vorzugsweise 0 bis 1,5 Gew.-%, jeweils bezogen auf die ursprünglich eingesetzte Monomermischung.

**Zusatz von Alterungsschutzmitteln**

Vor oder bei der Latexkoagulation werden dem Latex Alterungsschutzmittel zugesetzt. Hiefür eigenen sich phenolische und aminische Alterungsschutzmittel. Geeignete phenolische Alterungsschutzmittel sind alkylierte Phenole sowie sterisch gehinderte Phenole wie 2,6-Di-tert.-butylphenol, 2,6-Di-tert.-butyl-p-kresol (BHT), 2,6-Di-tert.-butyl-4-ethylphenol sowie 2,2-Methylen-bis-(4-methyl-6-tert.-butylphenol) (BPH). Bevorzugt sind BHT und BPH.

Wenn eine Verfärbung der Gele ohne Bedeutung ist, können auch aminische Alterungsschutzmittel auf Phenylendiaminbasis eingesetzt werden. Beispiele sind N-Isopropyl-N'-phenyl-p-phenylendiamin (IPPD), N-1,3-Dimethylbutyl-N'-phenyl-p-phenylendiamin (6PPD), N-1,4-Dimethylpentyl-N'-phenyl-p-phenylendiamin (7PPD) und N,N'-Bis-1,4-(1,4-dimethylpentyl)-p-phenylendiamin (77PD). Bevorzugt sind die genannten aminischen Alterungsschutzmittel. Aminische Alterungsschutzmittel werden bevorzugt dann verwendet, wenn die hydroxylmodifizierten Gele für die Herstellung von Reifen eingesetzt werden.

Die Menge zugesetzter Alterungsschutzmittel liegt üblicherweise im Bereich von 0,1 bis 2,5 Gew.%.

**Latexkoagulation**

Die Koagulation des Latex erfolgt üblicherweise durch Elektrolyte, die auch in Kombination mit polymeren Fällhilfsmitteln eingesetzt werden können. Durch die Verwendung von Salzen der Harz- und Fettsäuren ohne Zusätze anionischer, kationischer und neutraler Emulgatoren ist bei der Latexkoagulation die Einstellung von Krümelgrößen größer 5 mm problemlos möglich, sofern die weiter untenstehenden Temperaturkriterien erfüllt sind.

Elektrolyte im Sinne der vorliegenden Erfindung sind insbesondere Säuren und Salze. Als Säuren können beispielsweise Salzsäure, Salpetersäure, Schwefelsäure, Ameisensäure und Essigsäure verwendet werden. Bevorzugt sind Schwefelsäure und Essigsäure. Als Salze werden die Salze ein-, zwei- und dreiwertiger Metalle verwendet. Die entsprechenden Anionen der Salze sind ein-und zweiwertig. Beispiele für die verwendeten Elektrolyte sind Kochsalz, Kaliumchlorid, Natriumsulfat, Kaliumsulfat, Natriumnitrat, Kaliumnitrat, Natriumsulfat, Kaliumsulfat, Magnesiumchlorid, Magnesiumsulfat, Calciumchlorid, Aluminiumsulfat und Alaune, wie Kaliumaluminiumsulfat oder Natriumaluminiumsulfat. Bevorzugt ist Natriumchlorid, Natriumsulfat, Magnesiumchlorid, Magnesiumsulfat, Calciumchlorid, Aluminiumsulfat und Alaune, wie Kaliumaluminiumsulfat oder Natriumahuniniumsulfat.

Auch Kombinationen von Säuren und Salzen sind möglich. Bevorzugte Kombinationen sind Kochsalz/Schwefelsäure, Magnesiumsulfat/Schwefelsäure, Calciumchlorid/Essigsäure, Kaliumaluminiumsulfat/Schwefelsäure sowie Aluminiumsulfat/Schwefelsäure.

Die für die Latexkoagulation notwendigen Elektrolytmengen betragen im Allgemeinen 0,1 bis 100 Gew.-%, vorzugsweise 0,2 bis 50 Gew.%, besonders bevorzugt 0,5 bis 10 Gew.-% Elektrolyt, jeweils bezogen auf das Mikrogel. Polymere Fällhilfsmittel können nichtionisch, anionisch, kationisch oder zwittterionisch sein. Sie werden nicht alleine, sondern in Kombination mit den oben genannten Elektrolyten verwendet.

Beispiele für nichtionische polymere Fällhilfsmittel sind Polyethylenoxid, Ethylenoxidaddukte an (Alkyl)phenol/ Fonnaldehyd-Kondensate, Polyoxypropylen, Polyoxypropylenaddukte an (Alkyl)phenol/Formaldehyd-Kondensate, copolymere Additionsprodukte von Ethylenoxid und Propylenoxid an (Alkyl)phenol/Formaldhyd-Kondensate sowie an Fettsäuren, Blockcopolymere auf der Basis von Polyethylenoxid und Polypropylenoxid, Polyvinylpyrrolidon, Cellulosederivate, wie in DE 2 332 096 A, DE 2 425 441 A und DE 2 751 786 A beschrieben, Gelatine, voll- und teilverseiftes Polyvinylacetat sowie Polysaccharide, wie in DE 3 043 688 A beschrieben.

Beispiele für anionische polymere Fällhilfsmittel sind die Salze von Polyacrylsäuren.

Kationische polymere Fällhilfsmittel basieren üblicherweise auf Poly(meth)acrylamid sowie auf Copolymeren aus Epichlorhydrin und Dialkylaminen, wie Dimethylamin wie in US 4,920,176 beschrieben.

Bevorzugte polymere Fällhilfsmittel sind blockcopolymere Additionsprodukte von Ethylenoxid und Propylenoxid an Phenol/Formaldehydharze, die einen Trübungspunkt zwischen 10 und 100 °C, bevorzugt zwischen 20 bis 70 °C, wie in EP 0 779 301 A beschrieben, aufweisen, sowie wasserlösliche Polymere auf Cellulosebasis.

Die Mengen an polymeren Fällhilfsmitteln betragen 0,01 bis 5 Gew.-Teile, bevorzugt 0,05 bis 2 Gew.-Teile, jeweils auf 100 Gew.-Teile des Mikrogels bezogen.

Die Latexkoagulation wird im Temperaturbereich von 10 bis 150 °C, vorzugsweise bei Temperaturen von 10 bis 20 °C oberhalb der Glastemperatur ($T_g$), durchgeführt. Zur Herstellung hinreichend grober Krümel mit Abmessungen von mehr als 5 mm sollte die Koagulationstemperatur vorzugsweise um mindestens 10 °C, bevorzugt um mindestens 15 °C, besonders bevorzugt um mindestens 20 °C, höher als die Glastemperatur des Mikrogels liegen.

Für die Wäsche verwendet man Wasser in einer Menge von im Allgemeinen 0,5 bis 50 Gew.-Teile, vorzugsweise 1 bis 20 Gew.-Teile, besonders bevorzugt 2 bis 10 Gew.-Teile, jeweils bezogen auf 100 Gew.-Teile Mikrogel.

Als Waschwasser kann sowohl entionisiertes als auch nicht entionisiertes Wasser verwendet werden. Vorzugsweise ist die Waschwassertemperatur identisch mit der bei der Latexkoagulation verwendeten Temperatur. Die Wäsche kann kontinuierlich oder diskontinuierlich durchgeführt werden. Vorzugsweise setzt man für die Krümelwäsche ein Verfahren ein, bei dem die Wäsche im Gegenstromverfahren kontinuierlich durchgeführt wird.

**Analysenmethoden**

Die Bestimmung der Scherstabilität erfolgt am Latex, der abgestoppt und zur Entfernung der Restmonomeren und sonstiger flüchtiger Bestandteile mit Wasserdampf behandelt wurde. Der Latex enthält nur die Emulgatoren, die bei der Polymerisation eingesetzt wurden. Dem Latex wurden auch keine Alterungsschutzmittel zugesetzt.

Für die Bestimmung der Latexstabilität werden zwei Methoden angewandt:

1) Verfolgung des Latexdurchmessers in Abhängigkeit von der Latexlagerzeit bei Raumtemperatur.
2) Bestimmung der Scherstabilität in Abhängigkeit von der Latexlagerzeit bei Raumtemperatur.

Für die Bestimmung der Scherstabilität wurde der Latex zuerst durch ein Filter mit 50 μm Maschenweite filtriert. Danach wurde seine Feststoffkonzentration bestimmt. Für die Bestimmung der Scherstabilität wurden jeweils 80 ± 0,5 g Latex in ein Becherglas mit einem Innendurchmesser von 58 mm und einer Höhe von 144,5 mm gegeben. Der pH-Wert und die Feststoffkonzentration des Latex wurden nicht angepasst Die Scherbeanspruchung des Latex erfolgte mittels eines Ultraturrax T 18 Basic der Firma IKA® Werke GmbH & Co. KG, wobei eine gezackte Rührscheibe mit einem Durchmesser von 16,9 mm verwendet wurde. Der Abstand der Rührscheibenunterkante vom Becherboden betrug 12,7 ± 3 mm. Für die Bestimmung der Scherstabilität wurde der Latex 10 min bei Raumtemperatur einer Umdrehungszahl von 14.000 ± 200 $min^{-1}$ ausgesetzt. Danach wurde die Menge des bei der Scherung gebildeten Koagulats bestimmt. Hierfür wurde der Latex über ein Filter mit 50 μm Maschenweite filtriert. Das abfiltrierte Koagulat wurde abgetrennt und im Vakuumtrockenschrank bei 60 °C bis zur Gewichtskonstanz getrocknet. Die Koagulatmenge wurde auf die im Latex vor der Scherbeanspruchung enthaltene Feststoffinenge bezogen. Für die Berechnung der prozentual gebildeten Koagulatmenge wurden folgende Gleichungen verwendet:

$$\text{Feststoffmenge [g]} = \frac{\text{Latexmenge [g]} \times \text{Latexkonzentration [Gew. \%]}}{100\,\%}$$

$$\text{Koagulatmenge [\%]} = \frac{\text{trockene Koagulatmenge [g]}}{\text{Feststoffmenge [g]}} \times 100\,\%$$

Ein Latex ist dann ausreichend scherstabil, wenn die bei dieser Bestimmung gebildete Koagulatmenge kleiner als 5 Gew.% ist.

Bei den nicht erfindungsgemäßen Latices der Versuchsserie (1) wird deutlich, dass die bei der Latexscherung gebildete Koagulatmenge mit der Zunahme der Teilchengröße während der Latexlagerzeit korreliert.

Die Bestimmung des Teilchendurchmessers der Latextpartikel erfolgte in Abhängigkeit von der Latexlageizeit an einem filtrierten Latex (Maschenweite des Siebs: 50 μm) mittels dynamischer Lichtstreunug (DLS). Für die Messungen wurde ein Zetasizer® (Modellnummer Nano ZS) von Malvern Instruments Ltd., Worcestershire, England verwendet. Für die Messung wurde jeweils ein Tropfen des zu untersuchenden Latex mit einer 1 ml Kunststoffpipette in eine Messküvette, die mit entionisiertem Wasser gefüllt war, gegeben. Der auf diese Weise verdünnte Latex wurde durch zwei- bis dreimaliges Schütteln homogenisiert.

Es wurde gefunden, dass der durch dynamische Lichtstreuung ermittelte Durchmesser der Latexteilchen während der Latexlagerung zunimmt. Im Verlauf der Arbeiten zeigte sich, dass ein Latex so lange ausreichend stabil ist, wie die Teilchendurchmesser bei Werten kleiner 100 nm liegen. Bei Teilchendurchmessern zwischen 100 bis 170 nm ist die Latexstabilität nicht ausreichend. Durchmesser von mehr als 170 nm wurden nicht beobachtet, da der Latex bereits zu einem früheren Zeitpunkt vollständig koagulierte. Aufgrund dieser Beobachtungen darf ein scher- und lagerstabiler Latex seine Teilchengröße in Abhängigkeit von der Standzeit nur wenig ändern. Zur Erzielung einer ausreichenden Lagerstabilität muss auch bei einer Latexstandzeit von mehr als 4 Wochen der Teilchendurchmesser kleiner 100 nm bleiben.

Zur Bestimmung des Gehalts unlöslicher Polymeranteile (Gelgehalt) und des Quellungsindex werden 250 mg Polymer in 25 ml Toluol 24 Stunden unter Schütteln bei 23 °C gequollen. Danach wird das mit Toluol gequollene (nasse) Gel ($MG_{na0}$) durch Zentrifugation mit 20.000 Upm abgetrennt und gewogen und anschließend bei 70 °C bis zur Gewichtskonstanz getrocknet und nochmals gewogen ($MG_{trocken}$).

Der Gelgehalt entspricht dem in Toluol unlöslichen Anteil bei 23 °C. Er wird mit folgender Formel berechnet:

$$\text{Gelgehalt [\%]} = \frac{MG_{trocken}}{250} \times 100$$

Der Quellungsindex (QI) wird mit folgender Formel berechnet:

$$QI = \frac{MG_{naß}}{MG_{trocken}}$$

Der Gelgehalt und der Quellungsindex hängen insbesondere von der Art und Menge des vernetzenden Monomers (C), der Reglennenge und dem Polymerisationsumsatz ab. Der Gelgehalt beträgt vorzugsweise mehr als 70 Gew.-%, besonders bevorzugt mehr als 75 Gew.%, insbesondere mehr als 80 Gew.-%. Der Quellungsindex beträgt vorzugsweise weniger als 30, vorzugsweise weniger als 25.
Die Bestimmung der Glastemperatur ($T_g$) erfolgte mittels DSC, wobei das Gerät DSC-2 von Perkin-Elmer eingesetzt wurde. Im ersten Messzyklus wird die Probe mit flüssigem Stickstoff mit 320 K/min. auf -130 °C abgekühlt und mit einer Heizrate von 20 K/min. auf 150 °C aufgeheizt. Im zweiten Messzyklus wird wiederum auf -130 °C gekühlt und mit 20 K/min. aufgeheizt. Die $T_g$ wird im 2. Messzyklus bestimmt.
Die Glastemperaturen ($T_g$) der Mikrogele liegen im Bereich von im Allgemeinen -78 bis 150 °C, bevorzugt -78 bis 120 °C, besonders bevorzugt -75 bis 125 °C.

**Beispiele**

**Herstellung der Mikrogele**

Für die Herstellung der Mikrogele wurden folgende Einsatzstoffe verwendet (siehe Versuchsserien (1) bis (8). In diesen Tabellen werden sämtliche Rezepturbestandteile auf 100 Gew.-Teile der Monomermischung bezogen.

**Monomere**

1) Butadien (99%ig, entstabilisiert) der Lanxess Deutschland GmbH
2) Styrol (98%ig) von KMF Labor Chemie Handels GmbH
3) Triemthylolpropantrimethacrylat (96%ig) von Aldrich; Produktnummer: 24684-0; (Abkürzung: TMPTMA)
4) Hydroxyethylmethacrylat (97% von Arcos; Abkürzung: HEMA)

**Emulgatoren**

5) Disproportionierte Harzsäure (abgekürzt als HS) - berechnet als freie Säure ausgehend von der Menge eingesetzten Dresinate® 835 (Abieta Chemie GmbH; D-86358 Gersthofen)

Die eingesetzte Dresinate® 835-Charge wurde durch den Feststoffgehalt sowie durch die als Natriumsalz, als freie Säure und als Neutralkörper vorliegenden Emulgatorbestandteile charakterisiert.
Der Feststoffgehalt wurde nach der von Maron, S. H.; Madow, B. P.; Bomeman, E. "The effective equivalent weights of some rosin acids and soaps" Rubber Age, April 1952, 71-72 publizierten Vorschrift bestimmt.
Als Mittelwert von drei aliquoten Proben der eingesetzten Dresinate® 835 Charge wurde ein Feststoffgehalt von 71 Gew. % ermittelt.
Die als Natriumsalz und als freie Säure vorliegenden Emulgatoranteile wurden titrimetrisch nach dem von Maron, S. H., Ulevitch, I. N., Elder, M. E. "Fatty and Rosin Acids, Soaps, and Their Mixtures, Analytical Chemistry, Vol. 21, 6, 691-695 beschriebenen Verfahren ermittelt.
Zur Bestimmung wurden (in einem Beispiel) 1,213 g Dresinate® 835 (71%ig) in einer Mischung von 200 g destilliertem Wasser und 200 g destilliertem Isopropanol gelöst, mit einem Überschuss an Natronlauge (5 ml 0,5 N NaOH) versetzt und mit 0,5 N Salzsäure zurücktitriert. Der Titrationsverlauf wurde durch potentiometrische pH-Messung verfolgt. Die Auswertung der Titrationskurve erfolgte wie in Analytical Chemistry, Vol. 21, 6,691-695 beschrieben.
An drei aliquoten Proben der eingesetzten Dresinate® 835-Charge wurde als Mittelwert erhalten:

| | |
|---|---|
| Gesamtemulgatorgehalt: | 2,70 mmol / $g_{Trockenmasse}$ |
| Na-Salz: | 2,42 mmol / $g_{Trockenmasse}$ |
| Freie Säure: | 0,28 mmol / $g_{Trockenmasse}$ |

Mit Hilfe der Molmassen für das Na-Salz der disproportionierten Abietinsäure (324 g / mol) sowie der Molmasse für die freie disproportionierte Abietinsäure (302 g / mol) wurden die Gewichtsanteile an Na-Salz, freier Säure und nicht erfasster Anteile der eingesetzten Dresinate®) 835-Charge berechnet:

| | |
|---|---|
| Natriumsalz disproportionierter Harzsäure: | 78,4 Gew. % |
| Freie disproportionierte Harzsäure: | 8,5 Gew. % |

(fortgesetzt)

| | |
|---|---|
| Nicht erfasste Anteile (Neutralkörper) | 13,1 Gew. % |

In den folgenden Rezepturen wurden die bei den Polymerisationen eingesetzten Mengen an Dresinate® 835 in freie Säure umgerechnet (abgekürzt als HS) und als Gew.-Anteile bezogen auf 100 Gew.-Anteile Monomere angegeben. Bei dieser Umrechnung wurde der Neutralkörper nicht berücksichtigt.

Zum Nachvollzug der Umrechnung der in den Tabellen angegebenen Mengen an disproportionierter Abietinsäure (HS) auf der Basis der eingesetzten Mengen an Dresinate 835® sei folgende Tabelle angefügt:

| **Einwaage an Dresinate® 835 [g Trockenmasse]** | **Berechnete Menge an disproportionierter Abietinsäure (ohne Neutralkörper) [g Trockenmasse]** |
|---|---|
| 0,25 | 0,20 |
| 0,5 | 0,41 |
| 1,0 | 0,82 |
| 1,5 | 1,22 |
| 2,0 | 1,63 |
| 2,5 | 2,04 |
| 3,0 | 2,45 |
| 3,5 | 2,86 |
| 4,0 | 3,26 |
| 4,5 | 3,67 |
| 4,75 | 3,87 |
| 5,0 | 4,08 |

[6] Teilhydrierte Talgfettsäure - abgekürzt als FS (Edenor® HTiCT N der Firma Cognis Oleo Chemicals)

Der Gesamtemulgatorgehalt und das mittlere Molekulargewicht der verwendeten Edenor® HTiCT N-Charge wurden titrimetrisch mit Hilfe der folgenden Methoden bestimmt: Maron, S. H., Ulevitch, I. N., Elder, M. E. "Fatty and Rosin Acids, Soaps, and Their Mixtures, Analytical Chemistry, Vol. 21, 6, 691-695; Maron, S. H.; Madow, B. P.; Borneman, E. "The effective equivalent weights of some rosin acids and soaps" Rubber Age (1952), 71 71-2). Bei der Titration wurde (in einem Beispiel 1,5 g Edenor® HTiCT N in einer Mischung von 200 g destilliertem Wasser und 200 g destilliertem Isopropanol gelöst, mit einem Überschuss an 15 ml NaOH (0,5 mol/l) versetzt und mit 0,5 m Salzsäure zurücktitriert.

Hierbei wurde als Mittelwert von drei aliquoten Teilen der eingesetzten Edenor® HTiCT N-Charge erhalten:

| | |
|---|---|
| Gesamtemulgatorgehalt: | 3,637 mmol / $g_{Trockenmasse}$ |
| Molmasse (freie Säure): | 274,8 mg / mmol |

In den folgenden Rezepturen wurden die eingesetzten Mengen an teilhydrierter Talgfettsäure (wie kommerziell erhältlich) als "freie Säure = FS" angegeben.

Die Berechnung der zur Einstellung der in den Tabellen angegebenen Neutralisationsgrade erfolgte auf der Basis der titrimetrisch ermittelten Gehalte der verschiedenen Bestandteile der eingesetzten Dresinate® 835- und Edenor® HTiCT N-Chargen. Die Einstellung der Neutraliationsgrade erfolgte bei allen Beispielen der Versuchsserien (1) bis (8) mit Kaliumhydroxid.

**Regler**

[7] tert-Dodecylmercaptan der Chevron Phillips Chemical Company LP (Sulfole® 120)

[8] tert-Dodecylmercaptan der Lanxess Deutschland GmbH

Die Herstellung der Mikrogele erfolgte durch Emulsionspolymerisation in einem 20 1-Autoklaven mit Rührwerk. Bei den in der Versuchsserie (1) beschriebenen Polymerisationsansätzen wurden 2,15 kg Monomere mit 0,17 g 4-Methoxyphenol (Arcos Organics, Artikel-Nr. 126001000, 99 %) eingesetzt. Bei den in den Versuchsserien (2) bis (8) beschriebenen Polymerisationsansätzen wurden jeweils 4,3 kg Monomere mit 0,34 g 4-Methoxyphenol (Arcos Organics, Artikel-Nr. 126001000, 99 %) eingesetzt. Die in den Tabellen angegebenen Gesamtemulgator- und Gesamtwassermengen (abzüglich der für die Herstellung der wässrigen Prämix- und p-Menthanhydroperoxidlösungen -siehe unten-benötigten Wassermengen) wurden jeweils zusammen mit den Emulgatoren und den für die Einstellung der in den Tabellen 1 bis 8 angegebenen Neutralisationsgrade notwendigen Kaliumhydroxid-Mengen im Autoklaven vorgelegt.
Nach Aufheizung der Reaktionsmischung auf 30 °C wurden bei den in der Versuchsserie (1) aufgelisteten Polymerisationsansätzen jeweils 50 % frisch hergestellte wässrige Prämixlösungen (4 %ig) in den Autoklaven gegeben. Diese Prämixlösungen bestanden aus:

| | |
|---|---|
| 0,284 g | Ethylendiamintetraessigsäure (Fluka, Artikelnummer 03620), |
| 0,238 g | Eisen(11)-sulfat * 7 $H_2O$ (Riedel de Haen, Artikelnummer: 12354) (ohne Kristallwasser berechnet) |
| 0,576 g | Rongalit C, Na-Formaldehydsulfoxylat-2-hydrat (Merck-Schuchardt, Artikelnummer 8.06455) (ohne Kristallwasser berechnet) sowie |
| 0,874 g | Trinatriumphosphat * 12 $H_2O$ (Acros, Artikelnummer 206520010) (ohne Kristallwasser berechnet). |

Für die Aktivierung der in der Versuchsserie (1) aufgelisteten Polymerisationen wurden in Summe 1,4 g p-Menthanhydroperoxid (Trigonox NT 50 der Akzo-Degussa) eingesetzt, die in 200 ml der im Reaktor hergestellten Emulgatorlösung emulgiert wurden. Für den Start der Polymerisation wurden 50 % dieser Emulsion (0,7 g Trigonox NT 50) verwendet.
Bei Erreichen von 30 % Umsatz wurden die restlichen 50 % der Prämixlösung sowie der p-Menthanhydroperoxidemulsion zudosiert.
Bei den Versuchsserien (2) bis (8) wurde im Vergleich mit der Versuchsserie (1) die doppelte Menge dieser Komponenten sowohl zu Beginn der Polymerisation als auch bei Erreichen eines Polymerisationsumsatzes von 30 % in den Reaktor dosiert.
Die Temperaturführung während der Polymerisation erfolgte durch Einstellung von Fühlmittelmenge und Kühlmitteltemperatur in den in den Tabellen angegebenen Temperaturbereichen.
Bei Erreichen eines Polymerisationsumsatzes von mehr als 85 % (üblicherweise: 90 % bis 100 %) wurde die Polymerisation durch Zugabe einer wässrigen Lösung von 2,35 g Diethylhydroxylamin (DEHA, Aldrich, Artikelnummer 03620) abgestoppt.

**Entfernung flüchtiger Bestandteile**

Zur Entfernung flüchtiger Bestandteile aus dem Latex wurde der Latex bei Normaldruck einer Wasserdampfdestillation unterzogen.
Als Alterungsschutzmittel wurden vor der Latexkoagulation eine 50%ige Dispersion von Vulkanox® KB (1,25 Gew.% Vulkanox®KB bezogen auf Feststoff) in den Latex gegeben. Die Vulkanox®-KB-Dispersion bestand aus:

| | |
|---|---|
| 360 g | Entionisiertes Wasser (DW-Wasser) |
| 40 g | Alkylphenolpolyglykolether (Emulgator- NP10 der Lanxess Deutschland GmbH) |
| 400 g | Vulkanox® KB der Lanxess Deutschland GmbH |

Die Herstellung der Vulkanox®-KB-Dispersion erfolgte bei 95 - 98 °C mit Hilfe eines Ultraturrax.

**Latexkoagulation und Aufarbeitung**

Die Koagulation der Latices der Versuchsserien (1) bis (8) erfolgte diskontinuierlich in einem heiz- und rührbaren offenen 55 L-Kessel mit Bodenventil. Für die Latexkoagulation wurden jeweils 16 L Latex mit den in den Tabellen angegebenen Feststoffkonzentrationen und jeweils 15 L Fällflotte eingesetzt. Die Fällflotte bestand aus entionisiertem Wasser, in der so viel Calcitunchlorid gelöst wurde, dass bei jeder Latexkoagulation eine Calciumchloridmenge von 1,77 Gew.% Calciumchlorid bezogen auf Mikrogel (Feststoff) resultierte. Die Durchführung der Latexkoagulation erfolgte, indem der Latex unter Rühren zu der erwärmten Fällmittellösung gegeben wurde. Nach Zugabe des Latex wurde der abgekühlte Kesselinhalt auf die Temperatur des Füllmittels vor der Latexzugabe erwärmt und so lange bei dieser Temperatur belassen, bis sich das Serum klärte (10-15 min).

Die Temperatur, auf die die Fällmittellösung vor der Latexzugabe aufgeheizt wurde, richtete sich nach der Glastemperatur des Mikrogels. Bei den Versuchen, bei denen die Glastemperatur des Mikrogels < 0°C lag, war es ausreichend, die Fällmittellösung auf 50°C aufzuheizen, um hinreichend grobe Mikrogelkrümel mit einem Durchmesser von ca. 5 mm zu erhalten.

In den Versuchsserien (5) bis (8) sowie bei Versuch 16 (Serie 3), wurden Latices mit Mikrogel-Glastemperaturen > 0°C erhalten. Um bei der Koagulation dieser Mikrogellatices Krümel mit Durchmessern > 5mm zu erzielen, musste die Fällmittellösung auf eine Temperatur ≥ 15°C über der entsprechenden Glastemperatur des Mikrogels erhitzt werden, bevor der entsprechende Mikrogellatex zur Fällmittellösung zugegeben wurden

Nach der Klärung des Serums wurde die Krümeldispersion mit 20 L entionisiertem Wasser versetzt und ohne Rührung stehen gelassen. Nach 15 bis 30 rahmte die Krümeldispersion (außer bei Versuch 49*) auf. Das Serum wurde über ein Bodenventil abgelassen. Danach wurden die im Kessel verbleibenden Krümel mit 40 L entionisiertem Waser (25°C) unter Rühren aufgeschlämmt. Nach der Aufrahmung wurden die Krümel mit einem Sieb mit einer Maschenweite von 2 mm vom Waschwasser abgetrennt, mechanisch auf eine Restfeuchte von 20 bis 30 % vorentwässert und diskontinuierlich in einem Vakuumktrockenschrank unter Durchleitung eines Luftstroms bei 70 °C auf eine Restfeuchte ≤ 0,5 Gew.-% getrocknet.

Bei der Latexkoagulation von Versuch 49* resultierenden Krümel, die nach Zusatz von 20 L entionisiertem Wasser im Gegensatz zu den anderen Versuchen nicht aufrahmten, sondern sedimentierten. Bei diesem Versuch wurde das überstehende Latexserum abgezogen. Die Wäsche erfolgte wie bei den anderen Versuchen durch Aufschlämmung mit 40 L entionisiertem Wasser bei 25°C. Für die Abtrennung der Krümel vom Waschwasser wurde ein 2 mm-Sieb eingesetzt. Die weitere Aufarbeitung der Krümel erfolgte wie oben beschrieben.

In den folgenden Tabellen werden folgende Indizes verwendet:

1) Butadien (unstabilisiert)
2) Styrol (stabilisiert mit 100 bis 150 ppm 4-tert.-Butylbrenzkatechin)
3) Trimethylolpropantrimethacrylat (96%ig von Aldrich)
4) Hydroxyethylmethacrylat (97%ig von Arcos)
5) Aus der Menge eingesetzten Dresinates 835 berechnete Menge an disproportionierter Harzsäure (abgekürzt als HS)
6) Edenor HTiCT N der Firma Oleo Chemicals (abgekürzt als FS)
7) tert.-Dodecylmercaptan (Sulfol® 120 von Chevron Phillips)
8) tert.-Dodecylmercaptan (Lanxess Deutschland GmbH)

Erfindungsgemäße Beispiele sind nachfolgend durch ein "*" gekennzeichnet.

**Versuchsserie (1): Einfluss der HEMA-Menge auf die Latexlagerzeit (Nicht-erfindungsgemäße Vergleichsbeispiele)**

| Produkt | Monomere [Gew.-Teile] | | | | Emulgatoren [phm] | | | | | Wasser | Polymerisationstemperatur | Polymerisationszeit | Umsatz |
|---|---|---|---|---|---|---|---|---|---|---|---|---|---|
| | Butadien[1)] | Styrol[2)] | TMPTM[3)] | HEMA[4)] | HS[5)] | FS[6)] | HS/FS | HS+FS | Neutralisationsgrad [%] | [phm] | [°C] | [min] | [%] |
| 1 | 44,5 | 54 | 1,5 | 0 | 3,87 | 0,22 | 17,59 | 4,09 | 114 | 400 | 30-36 | 330 | 100 |
| 2 | 45,5 | 45,5 | 1,5 | 7,5 | 3,87 | 0,22 | 17,59 | 4,09 | 114 | 400 | 30-34 | 360 | 90,5 |
| 3 | 46,0 | 42,5 | 1,5 | 10 | 3,87 | 0,22 | 17,59 | 4,09 | 114 | 400 | 30-34 | 370 | 90,5 |

**Ergebnisse:**

| Produkt | Feststoffgehalt (nach Monomerentfemung) | Latex-pH (nach Monomerentfemung) | GelGehalt | Q-Index | Säurezahl | OH-Zahl | Tg | Teilchendurchmesser [nm] in Abhängigkeit von der Lagerzeit in Wochen | | | | | Koagulatmenge bei Scheruung [Gew.-%] in Abhängigkeit von der Lagerzeit /Wochen | | | | |
|---|---|---|---|---|---|---|---|---|---|---|---|---|---|---|---|---|---|
| | [Gew.%] | | [Gew.%] | | [mg KOH/g Microgel] | | [°C] | 0 | 3 | 6 | 8 | 12 | 0 | 3 | 6 | 8 | 12 |
| 1 | 20,0 | 11,1 | 63,3 | 11,7 | 6,2 | 7,7 | -22,5 | 65 | 67 | 66 | 65 | 63 | 0,25 | 0,22 | 0,55 | 0,75 | 1,0 |
| 2 | 18,6 | 7,6 | 92,1 | 7,9 | 5,4 | 25,0 | -14,5 | 65 | 105 | 136 | 166 | Koag. | 0,42 | 5,0 | 6,8 | 19,8 | Koag. |
| 3 | 18,6 | 7,9 | 94,2 | 10,9 | 6,2 | 32,6 | -155 | 73 | 120 | 218 | Koag. | Koag. | 0,27 | 15,4 | Koag. | Koag. | Koag. |

In den nicht erfindungsgemäßen Vergleichsbeispielen der Versuchsserie (1) wird gezeigt, dass im Vergleich mit dem HEMA-freien Referenzversuch 1 bei Einsatz von HEMA-Mengen von mehr als 5 Gew.-Teilen (bezogen auf die Monomerzusammensetzung) nicht ausreichende Latexlagerzeiten (von weniger als 3 Wochen) resultieren (Versuche 2 und 3), wenn bei Temperaturen oberhalb von 30 °C auf Umsätze von mehr als 90 % in Polymerisationszeiten von weniger als 7 Stunden polymerisiert wird und bei der Polymerisation disproportionierte Harzsäure und teilhydrierte Talgfettsäure im Gewichtsverhältnis 17,6/1 bei einem Neutralisationsgrad von 114 % eingesetzt werden.

**Versuchsserie 2.: Einfluss des Neutralisationsgrads von Harz- und Fettsäure auf die Latexstabilität**

| Produkt | Monomere [Gew.-Teile] | | | | Emulgatoren [phm] | | | | | Wasser | Polymerisationstemperatur | Polymerisationszeit | Umsatz |
|---|---|---|---|---|---|---|---|---|---|---|---|---|---|
| | Butadien[1)] | styrol[2)] | TMPTM[3)] | HEMA[4)] | HS[5)] | FS[6)] | HS/FS | HS+FS | Neutralisationsgrad [%] | [phm] | [°C] | [min] | [%] |
| 4 | 38 | 53 | 1,5 | 7,5 | 3,67 | 0,44 | 8,34 | 4,11 | 103 | 200 | 30-34 | 475 | 85,6 |
| 5 | 38 | 53 | 1,5 | 7,5 | 3,67 | 0,44 | 8,34 | 4,11 | 106 | 200 | 30-34 | 330 | 92,0 |
| 6 | 38 | 53 | 1,5 | 7,5 | 3,67 | 0,44 | 8,34 | 4,11 | 114 | 200 | 30-33 | 420 | 90,5 |
| 7 | 38 | 53 | 1,5 | 7,5 | 3,67 | 0,44 | 8,34 | 4,11 | 123 | 200 | 30-32 | 360 | 92,0 |
| 8 | 38 | 53 | 1,5 | 7,5 | 3,67 | 0,44 | 8,34 | 4,11 | 145 | 200 | 30-32 | 405 | 91,7 |
| 9 | 38 | 53 | 1,5 | 7,5 | 3,67 | 0,44 | 8,34 | 4,11 | 168 | 200 | 30-32 | 360 | 88,6 |

**Ergebnisse:**

| Produkt | Feststoffgehalt (nach Monomerentfernung) | Latex-pH (nach Monomerentfemung) | Gelgehalt | Q-Index | Säurezahl | OH-Zahl | Tg | Teilchendurchmesser [nm] in Abhängigkeit von der Lagetzeit /Wochen | | | | | |
|---|---|---|---|---|---|---|---|---|---|---|---|---|---|
| | [Gew.%] | | [Gew. %] | | [mg KOH/g Microgel] | | [°C] | 0 | 1 | 3 | 4 | 6 | 8 |
| 4 | 29,1 | 7,9 | 94 | 12,6 | 6,9 | 21,4 | -3 | 89 | 91 | 96 | 122 | 138 | 152 |
| 5 | 29,0 | 8,2 | 91,2 | 10,3 | 4,9 | 24,9 | -4,5 | 71 | 73 | 77 | 82 | 104 | 138 |
| 6 | 29,2 | 8,1 | 94,3 | 13,3 | 5,1 | 19,5 | -5 | 85 | 82 | 85 | 92 | 105 | 122 |
| 7 | 34,0 | 8,2 | 94,7 | 11,5 | 4,9 | 19,3 | -,5 | 79 | 79 | 82 | 96 | 112 | 118 |
| 8 | 32,0 | 8,4 | 94,6 | 14,0 | 5,4 | 19,4 | -5 | 83 | 83 | 91 | 98 | 124 | 138 |
| 9 | 30,3 | 8,4 | 95,2 | 11,9 | 6,0 | 20,6 | -5 | 85 | 86 | 107 | 127 | 152 | 163 |

Mit den Beispielen 5, 6, 7 und 8 der Versuchsserie (2) wird gezeigt, dass Latexlagerzeiten größer 4 Wochen resultieren, wenn das Verhältnis von disproportionierter Harzsäure / teilhydrierter Fettsäure (8,34/1) und der Neutralisationsgrad von Harz- und Fettsäure zwischen 106 % und 145 % beträgt. Nicht ausreichende Latexstabilitäten werden erhalten, wenn der Neutralisationsgrad von Harz- und Fettsäuren < 104 % bzw. >165 % beträgt.

**Versuchsserie (3): Einfluss der Mercaptanmenge auf die Latexstabilität bei Lagerung (erfindungsgemäße Beispiele 10*, 11*, 12*)**

| Produkt | tert-DDM [phm] | | Monomere [Gew.-Teile] | | | | Emulgatoren [phm] | | | | | Wasser | Polymerisationstemperatur | Polymerisationszeit | Umsatz |
|---|---|---|---|---|---|---|---|---|---|---|---|---|---|---|---|
| | 7) | 8) | Butadien 1) | Styrol 2) | TMPTM 3) | HEMA 4) | HS 5) | FS 6) | HS/FS | HS + FS | Neutralisationsgrad [%] | [phm] | [°C] | [min] | [%] |
| 10* | - | - | 91 | - | 1,5 | 7,5 | 3,67 | 0,44 | 8,34 | 4,11 | 123 | 300 | 30-32 | 360 | 97 |
| 11* | 0,10 | - | 91 | - | 1,5 | 7,5 | 3,67 | 0,44 | 8,34 | 4,11 | 123 | 300 | 30-32 | 300 | 100 |
| 12* | - | 0,20 | 91 | - | 1,5 | 7,5 | 3,67 | 0,44 | 8,34 | 4,11 | 123 | 300 | 30-32 | 300 | 95,5 |
| 13 | 0,25 | - | 44,5 | 46,5 | 1,5 | 7,5 | 3,67 | 0,44 | 8,34 | 4,11 | 123 | 400 | 30-35 | 240 | 97 |
| 14 | - | 0,5 | 44,5 | 46,5 | 1,5 | 7,5 | 3,67 | 0,44 | 8,34 | 4,11 | 123 | 400 | 30-38 | 220 | 98 |
| 15 | 0,85 | - | 44,5 | 46,5 | 1,5 | 7,5 | 3,67 | 0,44 | 8,34 | 4,11 | 123 | 400 | 30-40 | 200 | 96 |
| 16 | 0,85 | - | 10,5 | 80,5 | 4 | 5 | 3,67 | 0,44 | 8,34 | 4,11 | 123 | 400 | 30-35 | 180 | 95 |

**Ergebnisse:**

| Produkt | Feststoffgehalt (nach Monomerentfernung) | Latex-pH (nach Monomerentfemung) | Gelgehalt | Q-Index | SäureZahl | OH-Zahl | Tg | Teilchendurchmesser [nm] in Abhängigkeit von der Latexlagerzeit / Wochen | | | | | |
|---|---|---|---|---|---|---|---|---|---|---|---|---|---|
| | [Gew.%] | | [Gew. %] | | [mg KOH/g Microgel] | | [°C] | 0 | 2 | 4 | 6 | 8 | 12 |
| 10* | 25,0 | 8,0 | 96,2 | 7,9 | 6,8 | 27,7 | -78 | 65 | 65 | 68 | 89 | 121 | 160 |
| 11* | 26,4 | 7,7 | 96,1 | 9,6 | 6,3 | 25,8 | -79 | 62 | 61 | 60 | 68 | 86 | 123 |
| 12* | 25,2 | 8,5 | 95,2 | 13,2 | 7,1 | 28,5 | -79 | 56 | 55 | 66 | 94 | 107 | 121 |
| 13 | 17,0 | 7,8 | 92 | 14,8 | 3,3 | 20,6 | -13 | 47 | 52 | 69 | 88 | 98 | 112 |
| 14 | 18,0 | 7,4 | 88 | 22,5 | 3,4 | 26,3 | -11,5 | 51 | 54 | 76 | 84 | 91 | 96 |
| 15 | 18,0 | 7,4 | 78 | 24,7 | 6,5 | 25,9 | -15 | 50 | 51 | 55 | 63 | 75 | 130 |
| 16 | 17,8 | 7,5 | 96 | 11,3 | 7,5 | 20,0 | 62 | 47 | 49 | 65 | 81 | 88 | 93 |

Mit den erfindungsgemäßen Beispielen der Versuchsserie (3) wird gezeigt, dass die maximalen Latexlagerzeiten nahezu unabhängig von der Art und Menge des verwendeten Mercaptans sind, wenn die erfindungsgemäßen Bereiche für die Gesamtmenge an disproportionierter Harzsäure und teilhydrierter Fettsäure (4,11 Gew.-Teile auf 100 Gew.-Teile Monomer), das Gewichtsverhältnis von disproportionierter Harzsäure / teilhydrieiter Fettsäure (8,3 / 1) und der Neutralisationsgrad der disproportionierten Harz- und teilhydrierten Fettsäure (123%) eingehalten werden.

**Versuchsserie 4.: Einfluss des Gewichtsverhältnisses von Harz- und Fettsäure auf die Latexstabilität (erfindungsgemäße Beispiele: 17*, 18*, 19*, 20*, 21*, 22* und 23*)**

| Produkt | Monomere [Gew.-Teile] | | | Emulgatoren [phm] | | | | | Wasser | Polymerisationstemperatur | Polymerisationszeit | Umsatz |
|---|---|---|---|---|---|---|---|---|---|---|---|---|
| | Butadien 1) | TMPTM 3) | HEMA 4) | HS 5) | FS 6) | HS/FS | HS+FS | Neutralisationsgrad [%] | [phm] | [°C] | [min] | [%] |
| 17* | 91 | 1,5 | 7,5 | 4,08 | 0 | - | 4,08 | 122 | 300 | 30-34 | 420 | 97,1 |
| 18* | 91 | 1,5 | 7,5 | 3,67 | 0,44 | 8,34 | 4,11 | 123 | 300 | 30-32 | 345 | 92,5 |
| 19* | 91 | 1,5 | 7,5 | 3,26 | 0,88 | 3,70 | 4,14 | 124 | 300 | 30-32 | 300 | 99,0 |
| 20* | 91 | 1,5 | 7,5 | 2,86 | 1,32 | 2,17 | 4,18 | 125 | 300 | 30-32 | 300 | 100 |
| 21* | 91 | 1,5 | 7,5 | 2,45 | 1,76 | 1,39 | 4,21 | 126 | 300 | 30-32 | 300 | 98,0 |
| 22* | 91 | 1,5 | 7,5 | 2,04 | 2,20 | 0,93 | 4,24 | 126 | 300 | 30-32 | 300 | 96,0 |
| 23* | 91 | 1,5 | 7,5 | 0 | 2,20 | - | 2,20 | 128 | 300 | 30-32 | 300 | 95,5 |

**Ergebnisse:**

| Produkt | Feststoffgehalt (nach Monomerentfernung) | Latex-pH (nach Monomerentfernung) | Gelgehalt | Q-Index | SäureZahl | OH-Zahl | Tg | Teilchendurchmesser [nm] in Abhängigkeit von der Latextagerzeit / Wochen | | | | | |
|---|---|---|---|---|---|---|---|---|---|---|---|---|---|
| | [Gew.%] | | [Gew.%] | | [mg KOH/g Microgel] | | [°C] | 0 | 2 | 4 | 6 | 8 | 12 |
| 17* | 23,9 | 8,2 | 95,3 | 8,3 | 7,6 | 25,1 | -78 | 78 | 79 | 82 | 100 | 111 | 135 |
| 18* | 22,8 | 8,2 | 96,2 | 8,5 | 7,2 | 32,0 | -78,5 | 58 | 56 | 64 | 80 | 101 | 140 |
| 19* | 25,4 | 8,0 | 96,7 | 8,2 | 6,0 | 28,1 | -79 | 53 | 55 | 59 | 77 | 95 | 123 |
| 20* | 25,1 | 8,0 | 96,9 | 9,2 | 6,1 | 29,1 | -78,5 | 53 | 55 | 63 | 79 | 96 | 114 |
| 21* | 24,0 | 7,8 | 97,0 | 7,7 | 5,8 | 30,3 | -79 | 50 | 56 | 57 | 71 | 83 | 106 |
| 22* | 23,6 | 8,0 | 97,4 | 8,8 | 6,0 | 32,1 | -78 | 54 | 48 | 53 | 72 | 88 | 104 |
| 23* | 22,7 | 7,9 | 98,4 | 10,4 | 2,9 | 28,1 | -79 | 53 | 63 | 84 | 108 | 123 | 144 |

Mit den Beispielen der Versuchsserie (4) wird gezeigt, dass Latexlagerzeiten von mehr als 6 Wochen resultieren, wenn die Summe der Harz- und Fettsäuren ≥ 2,20.

**Versuchsserie 5.: Einfluss des Neutralisationsgrades von Harz- und Fettsäure auf die Latexstabiität**

| Produkt | Monomere [Gew.-Teile] | | | | Emulgatoren [phm] | | | | | Wasser | Polymerisationstemperatur | Polymerisationszeit | Umsatz |
|---|---|---|---|---|---|---|---|---|---|---|---|---|---|
| | Butadien 1) | Styrol 2) | TMPTM 3) | HEMA 4) | HS 5) | FS 6) | HS/FS | HS + FS | Neutralisationsgrad [%] | [phm] | [°C] | [min] | [%] |
| 24 | 21 | 70 | 1,5 | 7,5 | 2,45 | 1,76 | 1,39 | 4,21 | 112 | 300 | 30-34 | 300 | 96 |
| 25 | 21 | 70 | 1,5 | 7,5 | 2,45 | 1,76 | 1,39 | 4,21 | 116 | 300 | 30-32 | 300 | 97 |
| 26 | 21 | 70 | 1,5 | 7,5 | 2,45 | 1,76 | 1,39 | 4,21 | 119 | 300 | 30-33 | 300 | 100 |
| 27 | 21 | 70 | 1,5 | 7,5 | 2,45 | 1,76 | 1,39 | 4,21 | 123 | 300 | 30-36 | 200 | 99 |
| 28 | 21 | 70 | 1,5 | 7,5 | 2,45 | 1,76 | 1,39 | 4,21 | 126 | 300 | 30-39 | 150 | 96 |
| 29 | 21 | 70 | 1,5 | 7,5 | 2,45 | 1,76 | 1,39 | 4,21 | 129 | 300 | 30-31 | 360 | 96 |
| 30 | 21 | 70 | 1,5 | 7.5 | 2,45 | 1,76 | 1,39 | 4,21 | 132 | 300 | 30-32 | 300 | 96 |
| 31 | 21 | 70 | 1,5 | 7,5 | 2,45 | 1.76 | 1,39 | 4,21 | 136 | 300 | 30-45 | 120 | 100 |
| 32 | 21 | 70 | 1,5 | 7,5 | 2,45 | 1,76 | 1,39 | 4,21 | 139 | 300 | 30-31 | 300 | 98 |

**Ergebnisse:**

| Produkt | Feststoffgehalt (nach Monomerentfernung) | Latex-pH (nach Monomerentfernung) | GelGehalt | Q-Index | SäureZahl | OH-Zahl | Tg | Teilchendurchmesser [nm] in Abhängigkeit von der Latexlagerzeit / Wochen | | | | | |
|---|---|---|---|---|---|---|---|---|---|---|---|---|---|
| | [Gew,%] | | [Gew. %] | | [mg KOH/g Microgel] | | [°C] | 0 | 2 | 4 | 6 | 8 | 12 |
| 24 | 27,4 | 8,4 | 96,0 | 8,3 | 6,8 | 29,3 | 36,0 | 54 | 54 | 53 | 53 | 54 | 58 |
| 25 | 28,1 | 8,4 | 96,1 | 8,2 | 6,8 | 25,9 | 34,5 | 54 | 53 | 54 | 57 | 57 | 63 |
| 26 | 26,9 | 8,4 | 96,3 | 8,0 | 5,7 | 27,4 | 32,0 | 53 | 53 | 53 | 56 | 56 | 59 |
| 27 | 26,4 | 8,5 | 96,5 | 8,1 | 5,8 | 26,5 | 34,5 | 51 | 52 | 54 | 54 | 55 | 57 |
| 28 | 26,7 | 8,7 | 96,4 | 8,1 | 6,5 | 27,1 | 39,0 | 50 | 52 | 53 | 53 | 54 | 54 |
| 29 | 26,5 | 8,5 | 96,4 | 7,9 | 7,0 | 25,2 | 37,5 | 57 | 59 | 61 | 59 | 60 | 66 |
| 30 | 24,3 | 8,4 | 95,8 | 8,8 | 6,4 | 26,2 | 35,5 | 52 | 53 | 55 | 55 | 53 | 59 |
| 31 | 26,3 | 8,2 | 96,3 | 8,4 | 6,2 | 26,2 | 29,0 | 56 | 58 | 53 | 53 | 62 | 62 |
| 32 | 24,5 | 8,3 | 97,0 | 8,1 | 6,1 | 25,7 | 39,0 | 59 | 60 | 55 | 53 | 61 | 64 |

Mit den Beispielen der Versuchsserie (5) wird gezeigt, dass Latices mit ausreichender Stabilität von mehr als 12 Wochen resultieren, wenn die Neutralisationsgrade der disproportionierten Harzsure und der teilhydrierten Fettsäure zwischen 112 bis 139 % liegen.

**Versuchsserie (6): Einfluss der Emulgatonmenge (Summe Harz- und Fettsäure) auf die Latexstabilität**

| Produkt | Monomere [Gew.-Teile] | | | | Emulgatoren [phm] | | | | | Wasser | Polymerisationstemperatur | PolymerisationsZeit | Umsatz |
|---|---|---|---|---|---|---|---|---|---|---|---|---|---|
| | Butadien[1)] | Styrol[2)] | TMPTM[3)] | HEMA[4)] | HS[5)] | FS[6)] | HS/FS | HS + FS | Neutralisationsgrad [%] | [phm] | [°C] | [min] | [%] |
| 33 | 21 | 70 | 1,5 | 7,5 | 1,22 | 0,88 | 1,39 | 2,10 | 120 | 300 | 30-34 | 300 | 95 |
| 34 | 21 | 70 | 1,5 | 7,5 | 1,63 | 1,17 | 1,39 | 2,80 | 120 | 300 | 30-32 | 300 | 99 |
| 35 | 21 | 70 | 1,5 | 7,5 | 2,04 | 1,47 | 1,39 | 3,51 | 120 | 300 | 30-32 | 330 | 96 |
| 36 | 21 | 70 | 1,5 | 7,5 | 2,45 | 1,76 | 1,39 | 4,21 | 120 | 300 | 30-32 | 300 | 97 |
| 37 | 21 | 70 | 1,5 | 7,5 | 2,86 | 1,98 | 1,44 | 4,84 | 120 | 300 | 30-32 | 300 | 99 |
| 38 | 21 | 70 | 1,5 | 7,5 | 3,26 | 2,34 | 1,39 | 5,60 | 120 | 300 | 30-32 | 300 | 95 |
| 39 | 21 | 70 | 1,5 | 7,5 | 3,67 | 2,63 | 1,39 | 6,30 | 120 | 300 | 30-32 | 300 | 96 |

**Ergebnisse:**

| Produkt | Feststoffgehalt (nach Monomerentfernung) | Latex-pH (nach Monomerentfernung) | Gelgehalt | Q-Index | SäureZahl | OH-Zahl | Tg | Teilchendurchmesser [nm] in Abhängigkeit von der Latexlagerzeit / Wochen | | | | | |
|---|---|---|---|---|---|---|---|---|---|---|---|---|---|
| | [Gew.%] | | [Gew.%] | | [mg KOH/g Microgel] | | [°C] | 0 | 2 | 4 | 6 | 8 | 12 |
| 33 | 24,0 | 7,5 | 97,3 | 7,6 | 4,7 | 30,8 | 42 | 67 | 87 | 120 | Koag. | Koag. | Koag. |
| 34 | 25,3 | 7,0 | 96,8 | 8,1 | 6,4 | 30,0 | 39 | 56 | 57 | 70 | 99 | Koag. | Koag. |
| 35 | 25,1 | 8,0 | 96,4 | 7,9 | 6,2 | 29,7 | 40 | 53 | 52 | 61 | 56 | 59 | 64 |
| 37 | 26,4 | 8,3 | 96,1 | 8,2 | 7,2 | 30,8 | 37,5 | 51 | 51 | 58 | 55 | 53 | 53 |
| 37 | 25,1 | 8,5 | 96,3 | 8,0 | 7,6 | 28,7 | 36,5 | 56 | 54 | 62 | 58 | 54 | 57 |
| 38 | 25,3 | 8,7 | 96,0 | 8,1 | 8,8 | 30,8 | 41,5 | 54 | 61 | 56 | 52 | 54 | 56 |
| 39 | 23,7 | 8,8 | 95,9 | 8,3 | 8,6 | 31,4 | 43,5 | 53 | 58 | 53 | 52 | 53 | 55 |

Mit den Beispielen der Versuchsserie (6) wird gezeigt, dass stabile Latices mit Latexlagerzeiten von mehr als 6 Wochen resultieren, wenn die Summe aus disproportionierter Harzsäure und teilhydrierter Fettsäure ≥ 2,20 Gew.-Teile, bezogen auf 100 Gew.-Teilen der Monomermischung.

**Versuchsserie (7): Einfluss des Gewichtsverhältnisses von Harzsäure / Fettsäure auf die Latexstabilität**

| Produkt | Monomere [Gew.-Teile] | | | | Emulgatoren [phm] | | | | | Wasser | Polymerisationstemperatur | Polymerisationszeit | Umsatz |
|---|---|---|---|---|---|---|---|---|---|---|---|---|---|
| | Butadien 1) | Styrol 2) | TMPTM 3) | HEMA 4) | HS 5) | FS 6) | HS/FS | HS+FS | Neutralisationsgrad [%] | [phm] | [°C] | [min] | [%] |
| 40 | 21 | 70 | 1,5 | 7,5 | 0,20 | 2,42 | 0,08 | 2,62 | 120 | 300 | 30-32 | 300 | 100 |
| 41 | 21 | 70 | 1,5 | 7,5 | 0,41 | 2,20 | 0,19 | 2,61 | 120 | 300 | 30-32 | 300 | 95 |
| 42 | 21 | 70 | 1,5 | 7,5 | 0,61 | 1,98 | 0,31 | 2,59 | 120 | 300 | 30-32 | 300 | 98 |
| 43 | 21 | 70 | 1,5 | 7,5 | 0,82 | 1,76 | 0,47 | 2,58 | 120 | 300 | 30-32 | 300 | 97 |
| 44 | 21 | 70 | 1,5 | 7,5 | 1,02 | 1,54 | 0,66 | 2,56 | 120 | 300 | 30-32 | 300 | 100 |
| 45 | 21 | 70 | 1,5 | 7,5 | 1,22 | 1,32 | 0,92 | 2,54 | 120 | 300 | 30-32 | 335 | 95 |

**Ergebnisse:**

| Produkt | Feststoffgehalt (nach Monomerentfernung) | Latex-pH (nach Monomerentfernung) | Gelgehalt | Q-Index | SäureZahl | OH-Zahl | Tg | Teilchendurchmesser [nm] in Abhängigkeit von der Lagerzeit / Wochen | | | | | |
|---|---|---|---|---|---|---|---|---|---|---|---|---|---|
| | [Gew.%] | | [Gew. %] | | [mg KOH/g Microgel] | | [°C] | 0 | 2 | 4 | 6 | 8 | 12 |
| 40 | 27,1 | 7,8 | 93,0 | 8,4 | 4,3 | 28,2 | 37,0 | 51 | 56 | 60 | 85 | 95 | 135 |
| 41 | 23,9 | 7,9 | 70,3 | 7,6 | 4,4 | 31,4 | 42,0 | 60 | 59 | 57 | 60 | 61 | 67 |
| 42 | 25,1 | 7,8 | 73,8 | 8,2 | 4,3 | 29,8 | 37,0 | 52 | 53 | 67 | 70 | 83 | 115 |
| 43 | 25,1 | 8,0 | 73,5 | 7,5 | 4,8 | 30,4 | 37,5 | 54 | 60 | 59 | 57 | 58 | 62 |
| 44 | 25,3 | 7,6 | 74,0 | 7,7 | 4,1 | 27,3 | 35,5 | 59 | 57 | 69 | 73 | 84 | 97 |
| 45 | 24,6 | 7,9 | 71,2 | 7,6 | 3,8 | 30,4 | 42,0 | 61 | 61 | 62 | 63 | 76 | Koag. |

Mit den Beispielen der Versuchsserie (7) wird gezeigt, dass stabile Latices mit Latexlagerzeiten von mehr als 6 Wochen, erhalten werden, wenn das Gewichtsverhältnis von Harzsäure / Fettsäure größer als 0,08/l ist.

**Versuchsserie (8): Lagerstabile Mikrogellatices mit unterschiedlicher Glastemperatur**

| Produkt | Monomere [Gew.-Teile] | | | | | | | | | Wasser | Polymerisationstemperatur | Polymerisationszeit | Umsatz |
|---|---|---|---|---|---|---|---|---|---|---|---|---|---|
| | Butadien 1) | Styrol 2) | TMPTM 3) | HEMA 4) | HS 5) | FS 6) | HS/FS | HS+FS | Neutralisationsgrad [%] | [phm] | [°C] | [min] | [%] |
| 46 | 45,13 | 43,37 | 4 | 7,5 | 2,45 | 1,76 | 1,39 | 4,21 | 120 | 300 | 15 | 360 | 96 |
| 47 | 61,95 | 26,55 | 4 | 7,5 | 2,45 | 1,76 | 1,39 | 421 | 120 | 300 | 15 | 300 | 93 |
| 48 | 7,00 | 80,5 | 5 | 7,5 | 2,45 | 1,76 | 1,39 | 4,21 | 120 | 300 | 30 | 300 | 96 |
| 49 | - | 91 | 1,5 | 7,5 | 2,45 | 1,76 | 1,39 | 4,21 | 120 | 200 | 30-70 | 60 | 96 |
| 50 | 52 | 42,5 | 2,5 | 3,0 | 2,45 | 1,76 | 1,39 | 4,21 | 120 | 300 | 30 | 320 | 95 |
| 51 | 46,5 | 31,0 | 12,5 | 10 | 2,45 | 1,76 | 1,39 | 4,21 | 120 | 200 | 30-70 | 350 | 94 |
| 52 | 51,6 | 34,4 | 12,5 | 1,5 | 2,45 | 1,76 | 1,39 | 4,21 | 120 | 200 | 30-70 | 320 | 96 |

**Ergebnisse**

| Produkt | Feststoffgehalt (nach Monomerentfernung) | Latex-pH (nach Monomerentfernung) | GelGehalt | Q-Index | Saure-Zahl | OH-Zahl | Tg | Teilchendurchmesser [nm] in Abhängigkeit von der Lagerzeit / Wochen | | | | | |
|---|---|---|---|---|---|---|---|---|---|---|---|---|---|
| | [Gew.%] | | [%] | | [mg KOH/g Microgel] | | [°C] | 0 | 2 | 4 | 6 | 8 | 12 |
| 46 | 25,0 | 8,5 | 95,7 | 8,1 | 6,1 | 33,5 | -5 | 49 | 46 | 48 | 51 | 57 | 66 |
| 47 | 23,5 | 8,5 | 91,7 | 7,2 | 6,5 | 37,6 | -35,5 | 43 | 40 | 47 | 49 | 53 | 76 |
| 48 | 25,0 | 8.1 | 92.5 | 5,4 | 6,5 | 30,4 | +83,5 | 60 | 62 | 64 | 60 | 62 | 63 |
| 49 | 30,0 | 8,2 | 91,6 | 7,5 | 6,6 | 29,1 | +103,5 | 58 | 60 | 57 | 59 | 59 | 61 |
| 50 | 24,8 | 8,4 | 93,0 | 9,5 | 6,5 | 14,5 | -21,5 | 60 | 63 | 62 | 61 | 65 | 69 |
| 51 | 25,1 | 8,3 | 9.7 | 4,4 | 5,6 | 46,7 | -5 | 55 | 58 | 61 | 64 | 71 | 88 |
| 52 | 24,9 | 8,5 | 95 | 4,9 | 5,3 | 5,1 | -20 | 60 | 61 | 58 | 63 | 63 | 65 |

Mit den Beispielen der Versuchsserie 8) wird gezeigt, dass bei optimalem Harz/Fettsäute-Verhältnis von 1,39/1 und bei optimalem Neutralisationsgrad von 120% lagerstabile hydroxylmodifizierte Mikrogelatices mit Glastemperaturen im Bereich von -5 °C bis +103,5 °C und mit Hydroxylzahlen im Bereich 5,1 bis 46,7 mg KOH/g Mikrogel herstellbar sind.
Um bei der Koagulation der erfindungsgemäß hergestellten Mikrogellatices hinreichend große Krümel mit Durchmessern > 5 mm zu erzielen, war es essentiell, bei der Latexkoagulation, Temperaturen anzuwenden, die 15 °C höher als die Glastemperaturen der entsprechenden Mikrogele sind.

## Patentansprüche

1. Verfahren zur Herstellung von hydroxylgruppenhaltigen Mikrogelen unter Verwendung einer Emulgatorzusammensetzung, umfassend eine Mischung aus einer modifizierten Harzsäure (I) und einer Fettsäure (II), wobei der Neutralisationsgrad der Harzsäuren (I) und der Fettsäuren (II) 110 bis 155 % beträgt und das Gewichtsverhältnis von modifizierter Harzsäure zu Fettsäure zwischen 0,08 : 1 und 12 : 1 liegt und die hydroxylgruppenhaltigen Mikrogele aus Monomeren aufgebaut werden, welche ausgewählt werden aus der Gruppe, bestehend aus konjugierten Dienen (A), vernetzenden Monomeren (C) und hydroxylgruppenhaltigen Monomeren (D).

2. Verfahren nach Anspruch 1, **dadurch gekennzeichnet, dass** die modifizierte Harzsäure disproportionierte Harzsäure ist.

3. Verfahren nach Anspruch 1 oder 2, **dadurch gekennzeichnet, dass** die hydroxylgruppenhaltigen Mikrogele mittels Emulsionspolymerisation hergestellt werden.

4. Verfahren nach einem der Ansprüche 1 bis 3, **dadurch gekennzeichnet, dass** das Verfahren eine Aufarbeitung der erhaltenen hydroxylgruppenhaltigen Mikrogele durch Koagulation bei Temperaturen oberhalb der Glastemperatur des hydroxylgruppenhaltigen Mikrogels umfasst.

5. Verfahren nach Anspruch 4, **dadurch gekennzeichnet, dass** die Koagulation bei Temperaturen von mindestens 10 °C höher als die Glastemperatur des hydroxylgruppenhaltigen Mikrogels erfolgt.

6. Hydroxylgruppenhaltiges Mikrogel, erhältlich nach einem Verfahren gemäß einem der Ansprüche 1 bis 5.

7. Hydroxylgruppenhaltiges Mikrogel nach Anspruch 7, welches einen Gelgehalt von mehr als 70 Gew.-% aufweist.

8. Hydroxylgruppenhaltiges Mikrogel nach Anspruch 6 oder 7, **dadurch gekennzeichnet, dass** das Mikrogel einen Quellungsindex von weniger als 30 aufweist.

9. Hydroxylgruppenhaltiges Mikrogel nach einem der Ansprüche 6 bis 8, **dadurch gekennzeichnet, dass** es einen Gehalt an einpolymerisiertem hydroxylhaltigem Monomerer von mehr als 0,1 Gew.-% aufweist.

10. Hydroxylgruppenhaltiges Mikrogel nach einem der Ansprüche 6 bis 9, **dadurch gekennzeichnet, dass** es eine Hydroxylzahl von größer als 0,5 aufweist.

11. Verwendung von hydroxylgruppenhaltigen Mikrogelen gemäß einem der Ansprüche 6 bis 10 zur Herstellung von Reifenbauteilen, insbesondere von Reifenlaufflächen.

## Claims

1. Process for the production of microgels containing hydroxy groups using an emulsifier composition, encompassing a mixture composed of a modified resin acid (I) and of a fatty acid (II), where the degree of neutralization of the resin acids (I) and of the fatty acids (II) is from 110 to 155% and the ratio by weight of modified resin acid to fatty acid is from 0.08:1 to 12:1 and the microgels containing hydroxy groups are composed of monomers selected from the group consisting of conjugated dienes (A), crosslinking monomers (C) and monomers (D) containing hydroxy groups.

2. Composition according to Claim 1, **characterized in that** the modified resin acid is disproportionated resin acid.

3. Process according to Claim 1 or 2, **characterized in that** the microgels containing hydroxy groups are produced

by means of emulsion polymerisation.

4. Process according to any of Claims 1 to 3, **characterized in that** the process encompasses work-up of the resultant microgels containing hydroxy groups via coagulation at temperatures above the glass transition temperature of the microgel containing hydroxy groups.

5. Process according to Claim 4, **characterized in that** the coagulation is carried out at a temperature which is higher by at least 10°C than the glass transition temperature of the microgel containing hydroxy groups.

6. Microgel containing hydroxy groups, obtainable by a process according to any of Claims 1 to 5.

7. Microgel containing hydroxy groups according to Claim 6, which has more than 70% by weight gel content.

8. Microgel containing hydroxy groups according to Claim 6 or 7, **characterized in that** the microgel has a swelling index of less than 30.

9. Microgel containing hydroxy groups according to any of Claims 6 to 8, **characterized in that** it has more than 0.1% by weight content of copolymerized monomers containing hydroxy groups.

10. Microgel containing hydroxy groups according to any of Claims 6 to 9, **characterized in that** it has a hydroxy number of more than 0.5.

11. Use of microgels according to any of Claims 6 to 10 containing hydroxy groups for the production of tyre components, in particular of treads.

## Revendications

1. Procédé pour la préparation de microgels contenant des groupes hydroxyle avec utilisation d'une composition d'émulsifiant, comprenant un mélange d'un acide résinique modifié (I) et d'un acide gras (II), le degré de neutralisation des acides résiniques (I) et des acides gras (II) étant de 110 à 155% et le rapport pondéral d'acide résinique modifié à acide gras se situant entre 0,08:1 et 12:1 et les microgels contenant des groupes hydroxyle étant formés à partir de monomères qui sont choisis dans le groupe constitué par les diènes conjugués (A), les monomères de réticulation (C) et les monomères contenant des groupes hydroxyle (D).

2. Procédé selon la revendication 1, **caractérisé en ce que** l'acide résinique modifié est un acide résinique disproportionné.

3. Procédé selon la revendication 1 ou 2, **caractérisé en ce que** les microgels contenant des groupes hydroxyle sont préparés par polymérisation en émulsion.

4. Procédé selon l'une quelconque des revendications 1 à 3, **caractérisé en ce que** le procédé comprend un traitement des microgels obtenus contenant des groupes hydroxyle par coagulation à des températures supérieures à la température de transition vitreuse du microgel contenant des groupes hydroxyle.

5. Procédé selon la revendication 4, **caractérisé en ce que** la coagulation a lieu à des températures supérieures d'au moins 10°C à la température de transition vitreuse du microgel contenant des groupes hydroxyle.

6. Microgel contenant des groupes hydroxyle, pouvant être obtenu selon un procédé selon l'une quelconque des revendications 1 à 5.

7. Mikrogel contenant des groupes hydroxyle selon la revendication 7 qui présente une teneur en gel supérieure à 70% en poids.

8. Microgel contenant des groupes hydroxyle selon la revendication 6 ou 7, **caractérisé en ce que** le microgel présente un indice de gonflement inférieur à 30.

9. Microgel contenant des groupes hydroxyle selon l'une quelconque des revendications 6 à 8, **caractérisé en ce**

**qu'**il présente une teneur en monomères contenant des groupes hydroxyle sous forme copolymérisée supérieure à 0,1% en poids.

10. Microgel contenant des groupes hydroxyle selon l'une quelconque des revendications 6 à 9, **caractérisé en ce qu'**il présente un indice d'hydroxyle supérieur à 0,5.

11. Utilisation de microgels contenant des groupes hydroxyle selon l'une quelconque des revendications 6 à 10 pour la préparation de composants pour pneus, en particulier de bandes de roulement pour pneus.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0405216 A
- DE 4220563 A
- DE 19701488 A
- DE 19701487 A
- EP 1152030 A
- EP 1664158 A
- EP 1149866 A
- EP 1149867 A
- EP 1298166 A
- EP 1291369 A
- EP 1245630 A
- EP 1520732 A
- DE 19919459 A
- EP 1063259 A
- EP 1110986 A
- WO 0212389 A
- WO 0232990 A
- DE 10035493 A
- DE 102007011427 A
- DE 102007011424 A
- DE 2332096 A
- DE 2425441 A
- DE 2751786 A
- DE 3043688 A
- US 4920176 A
- EP 0779301 A


### In der Beschreibung aufgeführte Nicht-Patentliteratur


- Methoden der organischen Chemie. **HOUBEN-WEYL.** Makromolekulare Stoffe. Georg Thieme Verlag, 1961, vol. 1, 192-194
- Ullmann's Encyclopedia of Industrial Chemistry. vol. 31, 345-355
- **W. BARDENDRECHT ; L.T. LEES.** Ullmanns Encyclopädie der Technischen Chemie. Verlag Chemie, 1976, vol. 12, 525-538
- **W. BARENDRECHT ; L.T. LEES.** Ullmanns Encyclopädie der Technischen Chemie. Verlag Chemie, 1976, vol. 12, 530
- Ullmann's Encyclopedia of Industrial Chemistry. vol. 13, 75-108
- **MARON, S. H. ; ULEVITCH, I. N. ; ELDER, M. E.** Fatty and Rosin Acids, Soaps, and Their Mixtures. *Analytical Chemistry,* vol. 21 (6), 691-695
- **MARON, S. H. ; MADOW, B. P ; BORNEMAN, E.** The effective equivalent weights of some rosin acids and soaps. *Rubber Age,* 1952, 71-72
- **J. BRANDRUP ; E. H. IMMERGUT.** Polymer Handbook. Wiley & Sons, 1975
- **MARON, S. H. ; MADOW, B. P. ; BOMEMAN, E.** The effective equivalent weights of some rosin acids and soaps. *Rubber Age,* 1952, 71-72
- *Analytical Chemistry,* vol. 21 (6), 691-695
- **MARON, S. H. ; MADOW, B. P. ; BORNEMAN, E.** The effective equivalent weights of some rosin acids and soaps. *Rubber Age,* 1952, vol. 71, 71-2